# EUROPEAN PATENT SPECIFICATION

(11) **EP 0 730 752 B1**
(45) Date of publication and mention of the grant of the patent: **07.10.1998**
(21) Application number: 95904109.6
(22) Date of filing: 22.11.1994
(51) Int. Cl.: G02B 27/22

(54) **TECHNIQUE FOR DEPTH OF FIELD VIEWING OF IMAGES WITH IMPROVED CLARITY AND CONTRAST**
VERFAHREN ZUR BILDTIEFEBETRACHTUNG VON BILDERN MIT VERBESSERTER KLARHEIT UND VERBESSERTEM KONTRAST
TECHNIQUE POUR VISIONNER DES IMAGES EN PROFONDEUR DE CHAMP AVEC UNE CLARTE ET UN CONTRASTE AMELIORES

(30) Priority: 23.11.1993 US 155748
(43) Date of publication of application: 11.09.1996
(73) Proprietor: PETITTO, Tony, Beverly Hills, CA 90210 (US); LOTH, Stanislaw, Nanvet, NY 10954 (US)
(72) Inventor: PETITTO, Tony, Beverly Hills, CA 90210 (US); LOTH, Stanislaw, Nanvet, NY 10954 (US)
(74) Representative: Price, Nigel John King
(86) International application number: PCT/US94/13456
(87) International publication number: WO 95/14953

(56) References cited:
- WO-A-81/01201
- DE-A- 4 006 868
- GB-A- 2 184 286
- US-A- 4 309 074
- IBM TECHNICAL DISCLOSURE BULLETIN., vol.10, no.5, October 1967, NEW YORK US pages 601 - 603 R. V. POLE ET AL. 'Real time computer-generated 3-D display'

## Description

### BACKGROUND OF THE INVENTION

The present invention relates to a technique for viewing depth of field images. More particularly, the present invention relates to a curved prismatic screen which takes advantage of depth cues in a flat-type image to permit a viewer to see most of the depth of field elements that exist in the real image. Furthermore, the present invention relates to a technique for reducing grain in an image and providing increased contrast and improved clarity in the image.

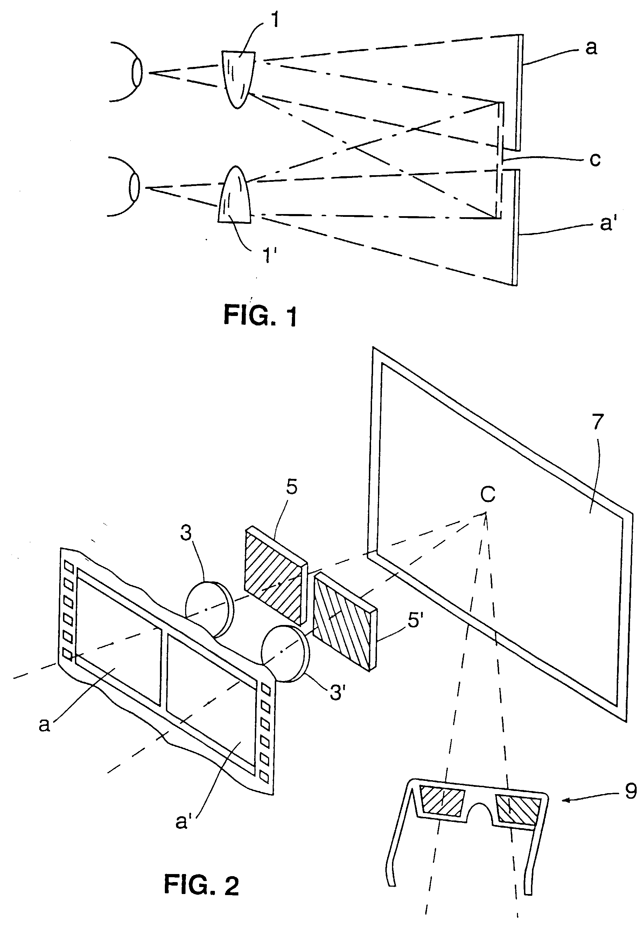

There currently are a number of optically or electronically guided depth of field systems for still photography, television, film, video and the like. These current systems are typically based on human eye stereopsis rules whereby two separate images, taken at the distance of the eyes, are separately provided to the respective eyes of the viewer. Examples of these types of systems are described below in connection with Figs. 1-4.

Referring to Fig. 1, one known technique for providing a stereoscopic image utilizes a stereo pair of photographic images ***a*** and ***a'*** and a pair of half lenses 1 and 1'. In operation, the half lenses 1 and 1' cause an observer to view a fused stereoscopic image *c* which includes apparent depth information. As a result, a viewer will perceive a three-dimensional effect in the fused image.

Fig. 2 illustrates a system useful for providing three-dimensional images for a motion picture or the like. A pair of film images *a* and *a'* are projected by lenses 3 and 3' through polarizing light filters ***a*** and ***a'***, respectively, onto a metallic nondepolarizing screen 7. A viewer wears appropriate polarizing glasses 9, which allow each of the viewers' eyes to see the corresponding film image ***a*** or ***a'***. As a result, a fused stereoscopic apparent image ***c*** is "seen" by the viewer for a three-dimensional effect.

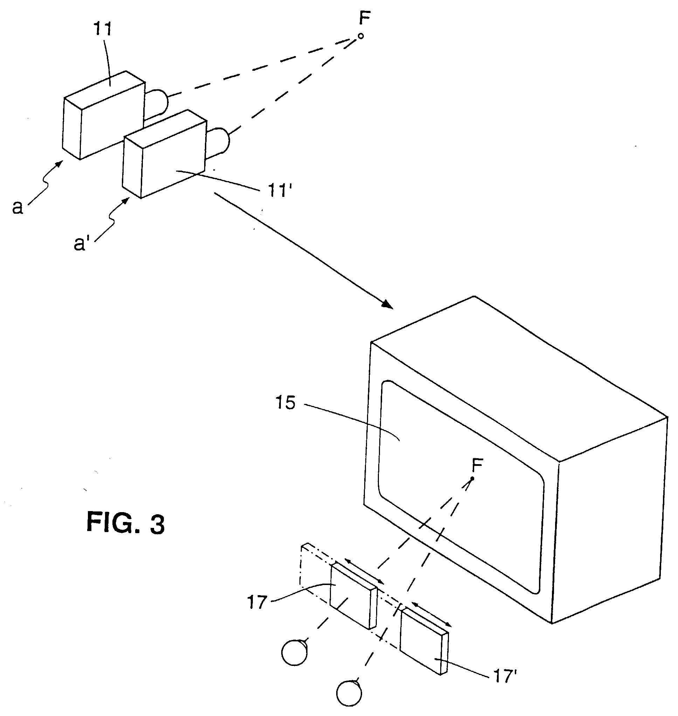

A third known device for producing stereoscopic images is illustrated in Fig. 3. A stereo pair of video cameras 11 and 11' converge at a point ***f*** to provide video camera images ***a*** and ***a'***, respectively, for simultaneous display on video screen 15. A pair of shutters 17 and 17' allow alternate viewing of the video display by the viewer. Only one eye is exposed to the image at any given moment. As a result, the viewer perceives a three-dimensional effect in the image.

A number of techniques for producing stereoscopic images are described in patent literature. For example, PCT Application No. WO 81/01201 to Shanks describes a system which produces a distorted plane image of a scene and causes observation of the distorted image on a saddle-shaped surface to give a three-dimensional presentation of the scene. Other techniques are described, for example, in U.S. Patent No. 2,889,739 to Moore; U.S. Patent No. 2,891,444 to Ewald; U.S. Patent No. 4,078,854 to Yano; U.S. Patent No. 4,158,481 to Hoyer; U.S. Patent No. 4,621,897 to Bonnet; U.S. Patent No. 4,772,094 and No. 4,871,233 to Sheiman; and U.S. Patent No. 4,927,238 to Green et al.

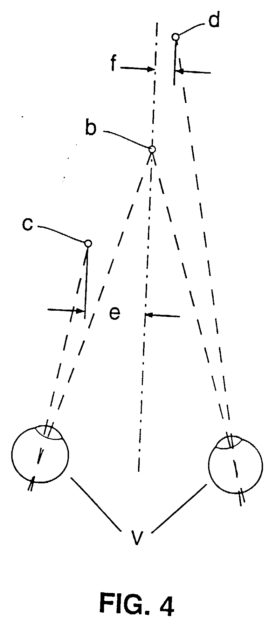

Each of the foregoing techniques is based on stereopsis, three-dimensional depth rules. Referring now to Fig. 4, the eyes of a viewer v are converged at a point ***b***. As an example of depth rules, an object placed closer than convergence point ***b*** appear to be shifted left at point ***c.*** Objects placed further than convergence point ***b*** appear shifted right at point ***d***.

Although existing three-dimensional imaging systems simulate stereopsis of the eyes fairly effectively, they require a special camera attachment, a two camera arrangement, or other means, to provide two images for a stereo pair. The stereo pair images require a device to separate them during viewing so that each eye of the viewer can see only one image of the stereo pair.

Due to the need for special camera systems and other equipment, shooting and recording images in three-dimensions is difficult, and viewing is restricted by the requirement of special glasses, eye shutters or similar devices. Three dimensional viewing systems are complicated, are commonly considered to be a gimmick, cause eye strain during viewing, and are expensive. Accordingly, they have not been accepted by the public or commercial film and video markets for any sustained period of time.

There are also a number of designs for magnifying a video small screen image to a larger screen image described in patent literature. For example US-A-2,449,886 and US-A-5,061,052 disclose such systems. Each of these designs are based on using a positive lens, or a lens combined with a Fresnel lens, and each technique places the optical system near the front of the video monitor screen. The lenses are designated with a short focal length which may cause distortion, because the magnification of the image is not equal in the center and on the edges. Additionally, the Fresnel lens, which is a concentric design of a magnifying lens, may cause image degradation by lowering the image resolution. According to US-A-5,061,052, the described system is intended to allow individuals of limited means to enjoy the entertainment and education provided by large screen television images, without the necessity of purchasing a large television set. However, such prior art television magnification of a small screen image to a larger screen image may cause distortion and a poor image, particularly since these systems magnify the raster of scanned video lines which make up the image. When the lines are magnified, the image is degraded and becomes distorted, and eye strain may result. These and other disadvantages of the prior art are overcome by the present invention.

According to one aspect of the present invention there is provided an apparatus for depth of field viewing of flat images by restructuring the images to restore depth in the image through interchange of perceived depth cues in place of stereopsis, characterised by:
a first transparent screen for positioning between a flat image and a viewer, said first transparent screen having a center portion and two side portions, and being curved across its width such that the center portion of the screen is arranged at a distance from the flat image greater than that of the side portions; and
a first plurality if optical elements formed in said first transparent screen and extending horizontally across the width of the screen, each of said optical elements being vertically spaced one above the other.

According to a further aspect of the present invention there is provided an apparatus for depth of field viewing of flat images by restructuring the images to restore depth in the image through interchange of perceived depth cues in place of stereopsis, characterised by:
a transparent screen for positioning between a flat image and a viewer, said transparent screen including a plurality of microprisms formed in said transparent screen and extending horizontally across the width of the screen, each of said microprisms being vertically spaced one above the other; and
an optical element positioned between said transparent screen and the viewer, said optical element operable to adjust the effective paths of light transmitted through said transparent screen.

The hereinafter described and illustrated embodiments of apparatus in accordance with the present invention enable the provision of depth of field images without the shortcomings associated with prior stereoscopic imaging systems. Furthermore, they provide a technique for displaying a planar image in a depth space with most of the image depth elements, provide an image with reduced grain, noise, and radiation which is harmful to the eyes, provide an image with increased contrast and improved clarity, provide depth of field viewing of video images on any size video monitor, provide a system which is designated optically to enhance depth cues and to give additional detailed information about the viewed image, provide a magnification of the image which separates the viewer's eye focus and convergence and provide a magnification for any size television screen image which is not more than 1.5x to 2.0x, which is below measurable magnification distortion, without magnifying the visibility of the space between scan lines.

Briefly, the preferred embodiments achieve this in a system including a screen which causes a viewer to interpret depth cues present in a flat image as if they provided real depth information. Various embodiments in accordance with the present invention include a curved prismatic screen which may be arranged between a viewer and a planer image to be viewed. A curved lenticular screen is also available. Reduced graininess and improved contrast and clarity may be provided for a video image by restructuring the image into a number of resolution lines greater than the number of scan lines in the original video image. Magnification of the image and increased image quality may be provided by a magnifying lens arranged adjacent the prismatic screen. To enhance image quality, improve image contrast, and reduce glare, an anti-reflective coating may be provided on the screen, and the screen may be tilted to strengthen depth information.

Additionally, to strengthen the focus and convergence separation and add additional image magnification, another embodiment of the present invention utilizes a specially designed magnifying lens as a supplement to the prismatic screen. The lens helps trigger the eye focus and convergence separation - making it stronger when combined with a prismatic screen. Depending upon the particular design of the lens, the viewed image may be magnified from 1.5x to 2.0x, and at the same time is cleared (cleaned) from the magnified raster of the video scanning lines. The clearing (cleaning) of the viewed image from the magnified raster is accomplished with the prismatic screen, which preferably includes three miniature prisms for each video scan line. As a result, each raster video scan line is divided two or three times, thereby providing a significant reduction in the visibility of the raster lines. As described in greater detail below, the prismatic screen may be either a flat or a curved structure, depending upon the choice of additional optical elements in the system.

Embodiments of apparatus in accordance with the present invention will hereinafter be described, by way of example only, with reference to the accompanying drawings, in which:
Fig. 1 is a schematic illustration of a prior art three-dimensional viewing system for use with still photographs;
Fig. 2 is a schematic illustration of a prior art three-dimensional viewing system including a polarized film/screening arrangement and polarized viewing glasses;
Fig. 3 is a schematic illustration of a prior art three-dimensional video viewing system utilizing a stereo pair of video cameras and a viewing shutter arrangement;
Fig. 4 illustrates a demonstration of three-dimensional stereopsis;
Fig. 5 is a perspective view of a first preferred embodiment of a depth of field screen in accordance with the present invention, including a depth of field curved prismatic screen;
Fig. 6 is a perspective view of a second embodiment of a depth of field screen in accordance with the present invention;
Fig. 7 is a perspective view of another embodiment of a depth of field screen constructed in accordance with the present invention;
Fig. 8 is a perspective view of a depth of field screen in accordance with the present invention for use with a rear projection screen viewing system;
Fig. 9 is a perspective view of a depth of field screen in accordance with the present invention for use with viewing still images;
Fig. 10 is a sectional view of the preferred depth of field screen taken along lines **10-10** of Fig. 5;
Fig. 11 is a sectional view of the preferred depth of field screen, illustrating a viewer looking at the center of a video monitor;
Fig. 12 is a perspective horizontal view of a depth of field screen in accordance with the present invention, illustrating eye focus and convergence points on a curved image surface;
Figs. 13-21 illustrate examples of depth cues of images which are useful in connection with the present invention;
Fig. 22 illustrates a stereopsis configuration in connection with depth cues;
Fig. 23 is a schematic view illustrating the left and right optic nerves crossing at the chiasma region of the brain;
Fig. 24 illustrates the manner in which the eyes and brain perceive a flat image on a video monitor screen or the like;
Fig. 25 illustrates the manner in which the eyes and brain perceive a depth image presented in accordance with the present invention;
Fig. 26 is a perspective view of an alternative depth of field screen including lenticulas and constructed in accordance with the present invention;
Fig. 27 is a sectional view taken along lines **27-27** of Fig. 26;
Fig. 28 is a top view of the depth of field screen of Figs. 26 and 27, illustrating focal differences;
Fig. 29 illustrates a video monitor screen having 400 scanning lines of image resolution;
Fig. 30 demonstrates the viewing distance at which the scanning lines of the video monitor screen of Fig. 29 are not visible;
Fig. 31 demonstrates a depth of field arrangement in accordance with the present inventions whereby the viewing distance at which the scanning lines of the video monitor screen are not visible is reduced;
Figs. 32(a) and 32(b) are an enlarged sectional side view and a corresponding front view, respectively, of prisms of a depth of field screen in accordance with the present invention;
Fig. 33(a) is a magnified view of video screen resolution lines, showing an image of a vertical line;
Fig. 33(b) is a magnified view of video screen resolution lines illustrating the vertical line image of Fig. 33(a) restructured into smaller elements in accordance with the present invention;
Figs. 34(a) and 34(b) respectively illustrate a video monitor screen with four hundred image resolution scan lines, and a video monitor screen restructured into 1200 image resolution lines in accordance with the present invention;
Fig. 35(a) illustrates a video screen resolution line with a horizontal line image moving downward;
Fig. 35(b) illustrates the downwardly moving horizontal line image of Fig. 35(a) restructured into two downwardly moving horizontal line images in accordance with the present invention;
Figs 36(a) and 36(b) respectively illustrate a video screen resolution line with a moveable "grain" element, and the grain element restructured in accordance with the present invention into two smaller images;
Fig. 37 illustrates the manner in which a depth of field screen protects the video display from reflected light;
Fig. 38 illustrates a depth of field screen in relation to the visual function portions of the brain;
Fig. 39 illustrates a further embodiment in accordance with the present invention;
Fig. 40 illustrates a preferred manufacturing technique useful in connection with the present invention.
Fig. 41 is an illustration of the present invention including the magnifying lens 204;
Fig. 42 is an illustration of how a plano convex lens magnifies an image;
Fig. 43 is an illustration of how the plano convex lens magnifies the video image in accordance with one aspect of the present invention;
Fig. 44 is an illustration of how the magnifying lens 204 enhances the depth cues of the viewed video image;
Fig. 45A is an illustration of the location of the prismatic screen in front of the video screen;
Fig. 45B is an illustration of one embodiment of the present invention with the lens 204 placed in front of the prismatic screen;
Fig. 45C is an illustration of an embodiment of the present invention with the lens 204 and the curved prismatic screen "PR" in place;
Fig. 45D is an illustration of an embodiment of the present invention with the lens 204 and the prismatic screen "PR" applied to the plano surface of lens 204;
Fig. 45E is an illustration of an embodiment of the present invention with the light pass "e" passing the lens L4 and the single prism of the prismatic screen "PR";
Fig. 45F is an illustration of an embodiment of the present invention wherein the light path "e" passes angled lens 204 and a single prism of a prismatic screen PR laminated to the lens;
Fig. 45G is another illustration of an embodiment with a prismatic screen laminated to the lens 204, wherein the angles of the prism and the lens 204 have been changed from those of Fig. 45F;
Fig. 46A is an illustration of an embodiment of the present invention with the lens 204 made in BK7 glass;
Fig. 46B is an illustration of another embodiment of the present invention with the lens 204 made with high refraction index SK16 glass;
Fig. 47 is an illustration of yet another embodiment of the present invention with the lens 204 designed as a hollow optical structure which is filled with a liquid high refraction index filler;
Fig. 48 is an illustration of the present invention with the lens 204 replaced by a parallel transparent plate;
Fig. 48A is an illustration of an embodiment of the present invention with the prismatic screen "PR" placed behind the transparent plate;
Fig. 49 is an illustration of the present invention with the prismatic screen "PR" attached to the parallel transparent plate;
Fig. 49A is an illustration of the present invention with the parallel transparent plate demonstrating how the viewers eyes see the virtual video image S2, which appears in front of the video screen S1; and
Fig. 50 is an illustration of the present invention with the parallel transparent plate which is hollow and is filled with a liquid high refraction index filler.

### DETAILED DESCRIPTION OF THE PREFERRED EMBODIMENTS

Although the present invention is described below in connection with specific preferred embodiments, it will be appreciated that the invention is not limited to the described embodiments. For example, although the preferred embodiments are described in connection with medical imaging systems, applicability of the present invention may also be found in flight simulator systems, virtual reality displays, computer-aided design systems, surveillance systems, and other environments in which image depth of field and/or improved image clarity and contrast are important. A number of additional applications in medical imaging systems are also available. For example, the present invention may find application in medical and obstetric imaging such as sonograms, musculo-skeletal imaging, vascular imaging, angiograms, angioplasty, dental probes, catheter probes, ear probes, endoscopy, laparoscopy, pelviscopy and arthroscopy. Other areas of application will be readily apparent to skilled artisans.

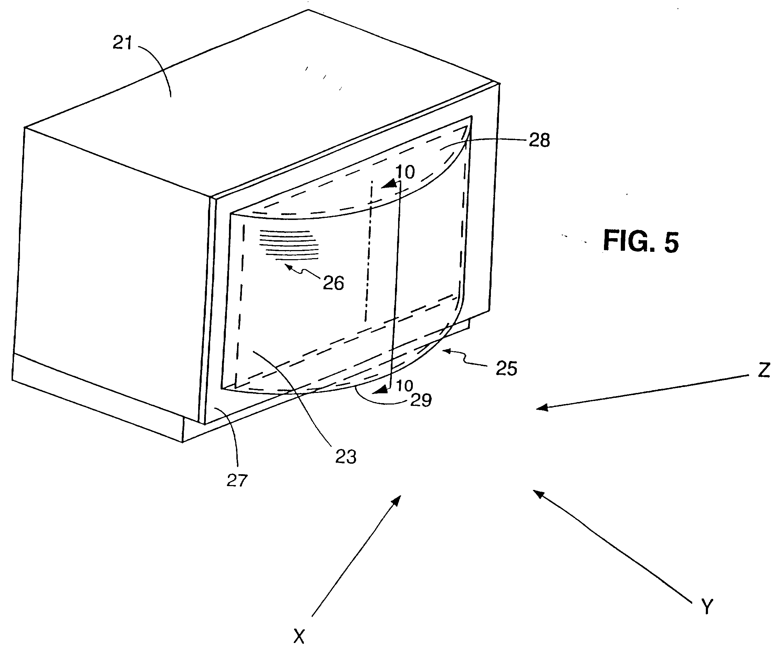

Referring now to Fig. 5, a standard 13" (33 cm) or 19" (48 cm) video monitor 21 includes a video screen 23. A curved depth of field screen 25 is provided in front of the video screen 23. As will be described below in greater detail, the depth of field screen 25 is preferably a multi-prismatic structure with a plurality of horizontal microprisms 26 extending across the width of the inner surface of the depth of field screen 25. The curved depth of field screen 25 may be held in a frame 27 which is fitted to the video monitor 21. The frame 27 covers the space between the video screen and the outside wall of the monitor and is, preferably designed to allow access to adjustment knobs and controls on the video monitor 21. The top portion 28 and the bottom portion 29 of the depth of field screen 25 may be provided with black masks to reduce ambient light behind the depth of field screen 25. As an alternative to providing a separate depth of field screen for attachment to a video monitor, the depth of field screen may be integrated with the video monitor at the time of manufacture.

The depth of field screen 25 is preferably made of an optic grade plastic and preferably includes at least three horizontal prisms 26 for each scan line of the video monitor. Ideally, the screen may include a prism density of between 60 prisms/inch (23.6/cm) and 160 prisms/inch (70/cm). Improved results generally will be obtained with increased density of prisms. However, manufacture of the screen may become more complex and expensive with high prism densities.

One material useful for manufacture of the depth of field screen 25 is a polycarbonate sheet material with haze of less than 1% and bulk absorptivity of less than 50 dB/m. The polycarbonate sheet preferably has a caliper of 0.018" ± 0.003" (0.046 cm ± 0.008 cm), a distortion temperature of at least 265°F, and fairly high tensile strengths. As alternatives, an optical grade acrylic or other transparent plastic or glass material may be used.

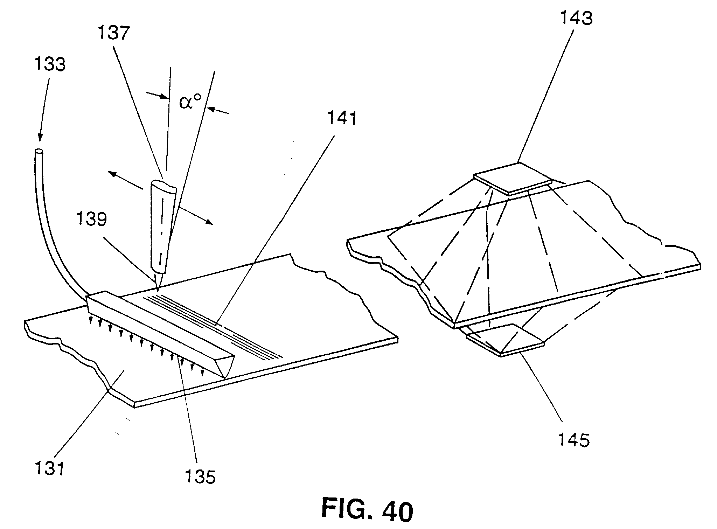

The micro prisms 26 may be formed by any appropriate technique such as cutting, shaping, molding or the like. In the preferred manufacturing technique, described in greater detail in connection with Fig. 40, a transparent sheet of screen material is milled to form the microprisms. The milled sheet may then be polished and coated with an anti-reflective coating. The anti-reflective optical coating helps enhance the quality of the image, increase contrast, and reduce glare and ghosting of the image. Depending upon the application, the prisms may be either symmetric or asymmetric and have sides angled from 60° to 120° relative to one another.

The side portions of the sheet are then fitted into the frame 27 so that, in use, they will be adjacent the video screen 23. The screen curves away from the video screen toward the center portion of the depth of field screen, reaching its greatest distance from the video screen at the center line. For a 19" (48 cm) video monitor screen, the depth of field screen may be approximately 7" (17.8 cm) from the video screen at the center line. The curvature of the prismatic screen allows viewing from a variety of angles such as x, y and z, and plays a significant role in restoring the depth effect.

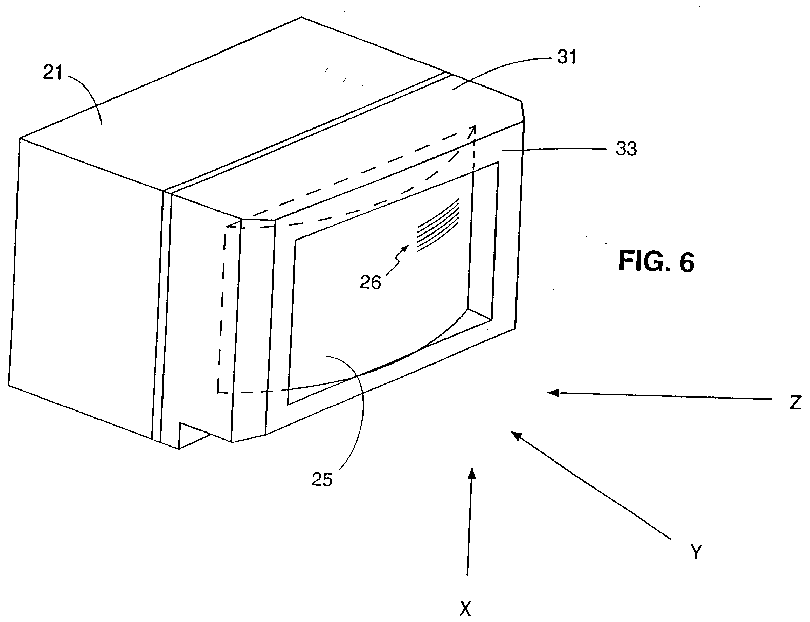

Turning now to Fig. 6, a second embodiment of the depth of field screen is illustrated which is particularly suitable for medical use in depth of field high precision viewing with dental probes, internal body probes and operations, bone and bone joint probes and operations, angiograms, angioplasty procedures and catheter probes. Such medical uses often involve viewing a monitor in a brightly lit room with lights surrounding the monitor, but the viewing may be limited to a narrower range of angles x', y', z'. This embodiment is also particularly suitable for use in depth of field high precision viewing of commercial design applications that are viewed on a television, video or computer monitor.

As shown in Fig. 6, the depth of field prismatic screen 25 is fitted with a light shading hood 31, which shields the screen from the top, bottom and sides. Additionally, a front frame may be provided to protect the depth of field screen 25 from lights in front of the monitor.

The size of the front frame 33 may depend upon the application and viewing conditions. For example, in a situation with a number of lights in front of the screen, it would be desirable to have a relatively large front frame 33. This, however, might reduce the available viewing angles x', y', z' to an unacceptable degree. Accordingly, an adjustable front frame 33 would allow a viewing to better control the viewing conditions.

In some medical procedures, a probe will provide only a small image, even on a 19" (48 cm) viewing monitor. For example, a probe used in lacrimal tear duct endoscopy operations provides a circular image less than 2" (2.51 cm) in diameter on a 19" (48 cm) video monitor. In such situations, it is preferable to provide the depth of field screen in front of the usable portion of the image only.

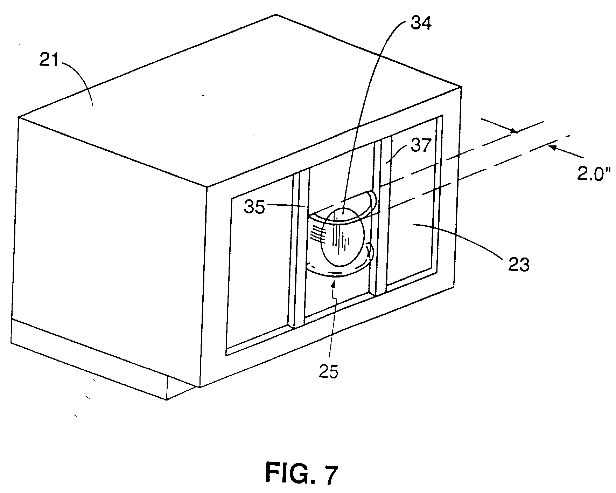

Fig. 7 illustrates an arrangement for depth of field viewing of a small image, 34 on a large video screen 23. A pair of vertical brackets 35 and 37 are attached to the video monitor 21 to support the depth of field screen 25. As an option, the depth of field screen 25 may be formed from a pair of curved prismatic sheets placed one above the other. For a 2" (5.1 cm) circular image 34, which is typical in lacrimal tear duct endoscopy operations, the center portion of the depth of field screen 25 preferably extends approximately 5.1 cm from the video screen 23. Also, in this application the inner portions of vertical support brackets are separated approximately 7.6 cm.

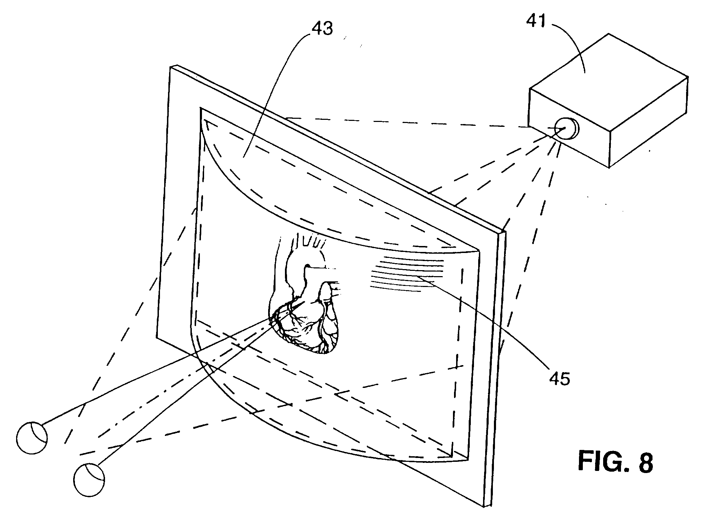

A depth of field viewing arrangement useful for watching a projected image such as a motion picture or photographic slides is shown schematically in Fig. 8. A projector 41 focuses a rear screen projected image on the rear of screen 43. The image is then viewed through a depth of field screen 45. Such an arrangement is particularly suitable for depth of field viewing of slide images of laparoendoscopic (interior body) surgery.

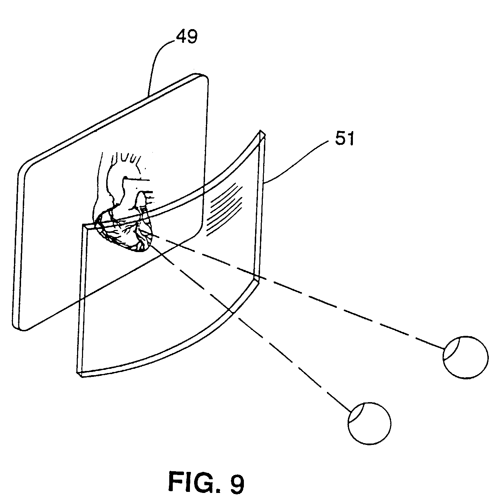

A depth of field viewing arrangement useful in connection with still photographs is illustrated in Fig. 9. As shown, a photograph 49 may be viewed through a curved prismatic screen 51 to provide depth of field. This arrangement could find application, for example, in depth of field, high precision viewing of real estate, wanted criminals, missing persons, accidents, insurance and court evidence reports that include still photographs.

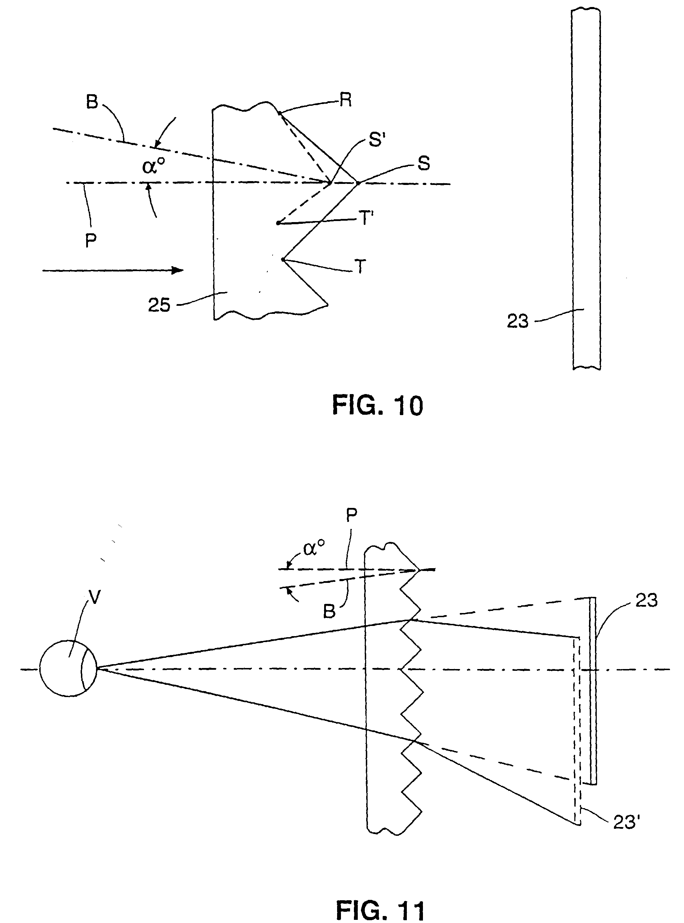

Fig. 10 shows a sectional view of a portion of a curved prismatic screen in accordance with the present invention. In use, as indicated by the arrow, a viewer would look at the video screen 23 or other object through the depth of field prismatic screen 25. In the illustrated prismatic screen, a right angle prism is defined on the inner surface of the screen by the 90° angle between the points R, S and T. The prisms are preferably formed with an angle between 60° and 95°, but may vary from 60° up to 120°.

The prisms may be tilted either upwardly or downwardly up to 45°, depending on the viewer's angle of view and the dimensions of the image. More specifically, referring to Fig. 10, a line P is perpendicular to the flat outer face of the depth of field screen. A line B bisects the angle defining the prism. The angle a between the lines determines the degree of tilt of the prism. For example, the prism defined by points R, S', T' is tilted downwardly by a°.

The number of prisms formed in the depth of field screen varies in accordance with the size of the video screen and the distance at which the viewer will be located. For a video monitor, the number of prism lines is at least equal to the number of video scan lines on the monitor. However, the number of prisms preferably varies from approximately three prisms per video image line to two or three times that number, resulting in from sixty prism lines per inch (23.6/cm) up to one hundred sixty or more prism lines per inch (70/cm).

Turning now to Fig. 11, a depth of field screen 25 includes asymmetric prisms tilted upwardly by a°. Due to this tilt, a viewer V looking at the center of the video screen 23 will see a video screen image 23' which is shifted downward from the actual level of the video screen 23. Similarly, prisms tilted downwardly would cause the screen image to shift upward. Such shifting may be desired, for example, when a video monitor is mounted either above or below the eye level of the viewer.

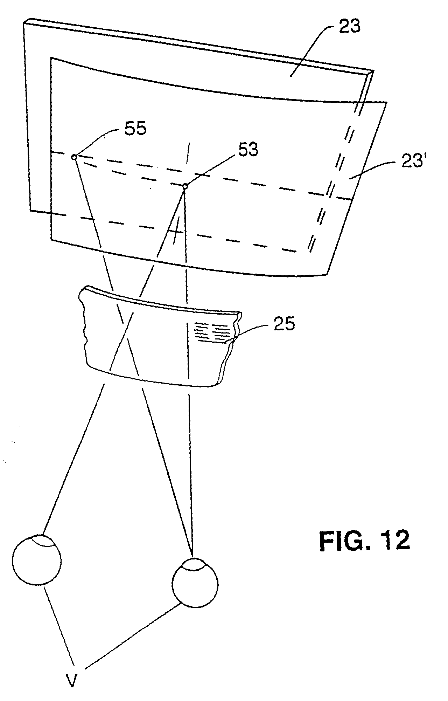

Fig. 12 illustrates a perspective view of the Fig. 11 configuration. When viewing through the curved prismatic screen 25, the flat image on video monitor 23 is seen as a curved image 23'. Accordingly, the viewer's eyes are forced to change focus and converge when moved from point 53 in the image 23' to point 55. As a result, the viewer's brain is "confused" by the received image data and begins to analyze the image depth cues included in the flat image. These image depth cues are present to some extent in every flat image, whether photographed or recorded electronically.

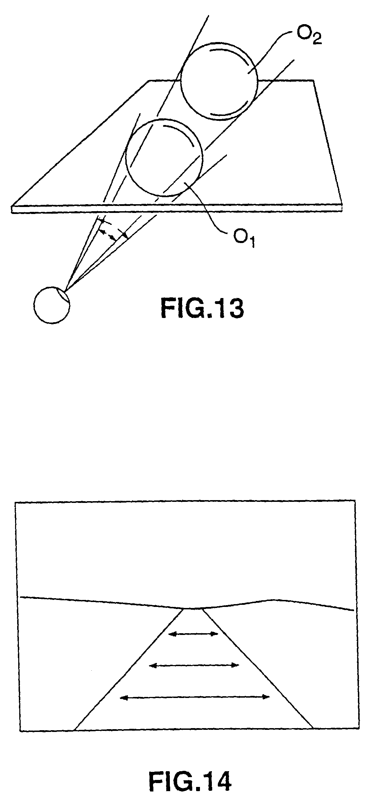

Examples of depth cues classified as psychological cues are discussed below in connection with Figs. 13-21. These psychological cues are perceived independently from the stereopsis and convergence ability of a viewer's eyes.

In Fig. 13, object O₁ and O₂ are the same size but project different retinal image sizes due to their respective distances from the eye. As illustrated, the object O₁ subtends a larger angle in the eye's field of view than does the object O₂. Hence, the object O₁ is perceived by the brain as being closer than object O₂. In general, objects of the same size appear larger when they are closer to the eye, or smaller when they are further from the eye.

Fig. 14 illustrates the effect of linear perspective as a psychological depth cue. Objects such as a roadway which extend from the foreground into the distance appear smaller as they recede from the observer. Lines extending from their shapes appear to meet at a point on the horizon.

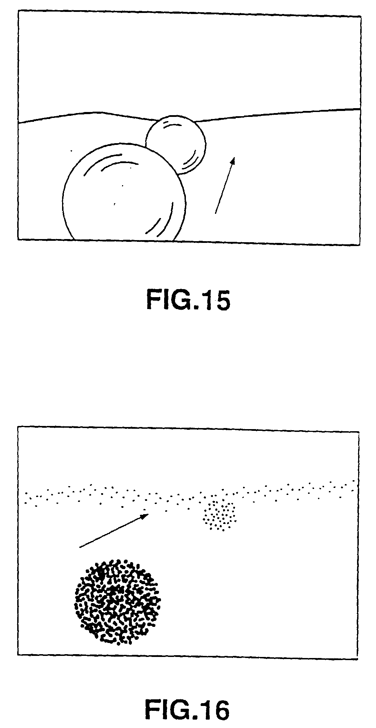

Fig. 15 depicts the role of interposition or overlapping as a depth cue. Briefly, an object placed in front of another covers a portion of the object in the distance. The brain readily interprets this indication of relative depth of the objects.

Fig. 16 illustrates aerial perspective as a depth cue. Very distant objects placed in bright illumination have a soft and light appearance. Dust particles in the air disperse light between the object and the viewer, thus reducing the contrast of objects in the distance.

As shown in Fig, 17, light and shade help the brain interpret the depth of an object. For example, the angle of an object's shadow indicates its relative position to a source of light. Furthermore, illumination provides perception of which surface of an object is convex and which surface is concave.

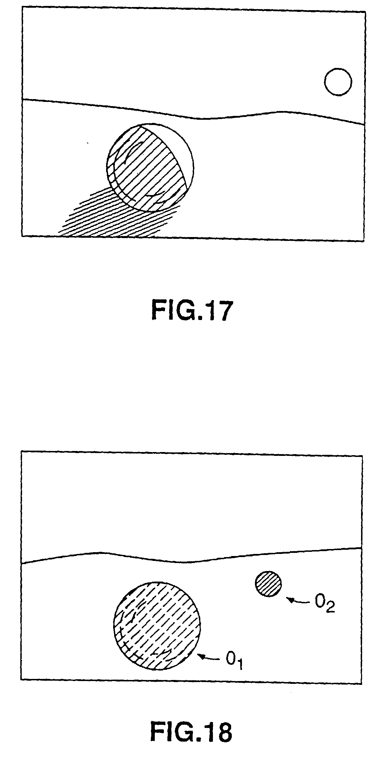

Textural gradient provides a further depth cue. Referring to Fig. 18, the texture of a close object O₁ is visible whereas the texture of a distant object O₂ is not visible. As a result, the brain will interpret an object in which the texture is visible as being relatively nearby.

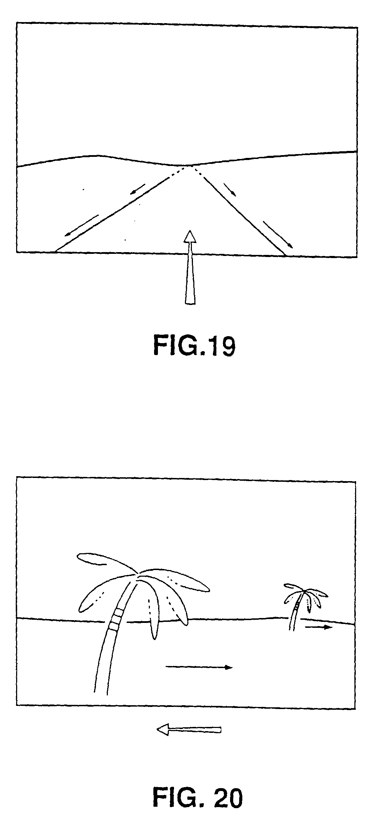

Figs. 19 and 20 illustrate the role of motion parallax in providing depth cues. Referring to Fig. 19, as the viewpoint of an observer moves forward in the direction of the large arrow (*e.g.,* in a video taken from a moving car or the like) nearby objects will appear to move faster than distant objects. Similarly, in Fig. 20 as a viewer scans from right to left in the directions of the large arrow, objects in the foreground will move across the field of view more quickly than objects in the distance, providing the brain with an indication of relative distance.

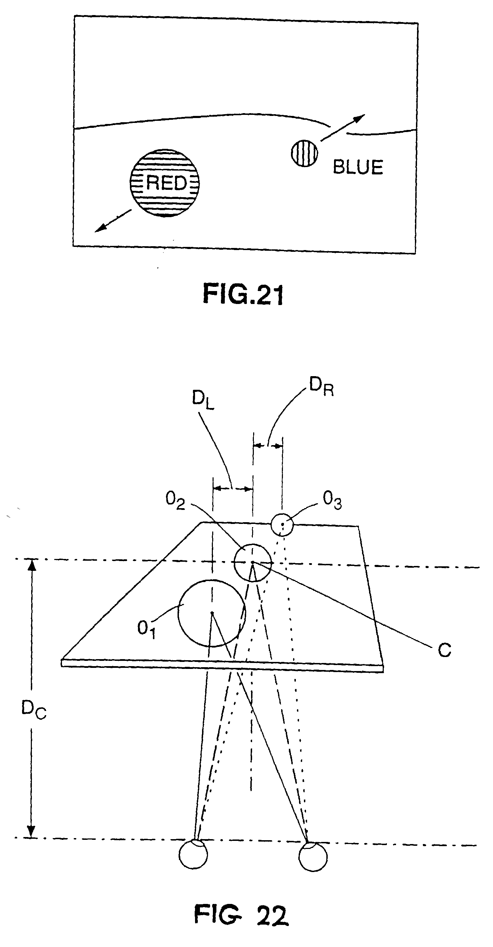

Turning now to Fig. 21, red objects appear closer than blue objects. Blue, which is perceived as the color of the sky, is integrated as a indication of distance.

Fig. 22 illustrates the role of stereopsis in depth perception. Stereopsis is based on the angular convergence ability of the eyes, and permits the brain to compare the difference between the image viewed by the left eye and the image viewed by the right eye. An object O₁ closer than the distance D_{C} of the convergence point C of the eyes is "shifted" to the left by the distance D_{L}. Likewise, an object O₃ which is further than the convergence distance D_{C} appears to be shifted right by a distance D₂ relative to the convergence point C.

Stereopsis works in conjunction with psychological depth cues to define an image having depth relationships fully understandable by the brain. However, depth cues can operate independently of stereopsis to created depth perception in the brain. The present invention takes advantage of this characteristic of depth cues.

Depth cues as a whole are an understanding by the brain, both learned and inherited, of how deptn is perceived by the eyes. This understanding is based on the manner in which objects appear in shape and depth, and how an image of the object is recorded in the brain's memory. To a large extent, these depth cues are a result of the evolution of human vision and are tied to environments commonly experienced in human life. Accordingly, depth perception underwater is often misleading because it is not an environment common in human experiences. Accordingly, underwater depth cues are not fully understandable by the human brain. Similarly, depth perception in outer space could be expected to be misleading since it is an environment unfamiliar to humans.

The human brain continually influences or corrects the vision process. As an example, an eye will typically cover a field of view about 180° horizontally and about 150° vertically. Despite the presence of the nose in the field of view, one does not notice it - the brain compensates for its presence.

As another example of how the brain cc-rects vision, depth perception remains even if one closes an eye. That is, even with one eye closed, a perceived image does not change to an entirely flat one, despite the lack of stereopsis. It is a simple matter for one to bring together fingers of opposite hands on outstretched arms. With only slightly more difficulty, it can still be done even with one eye closed, since the brain restores depth elements missing due to the lack of stereopsis.

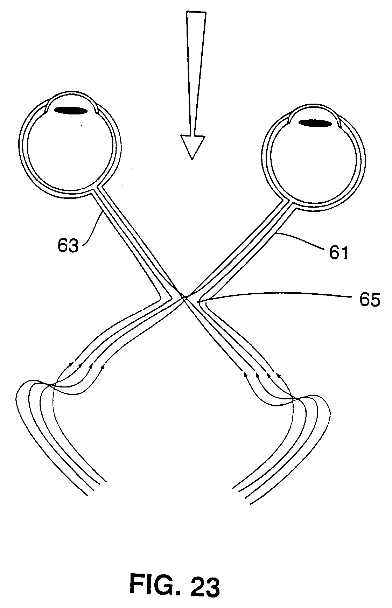

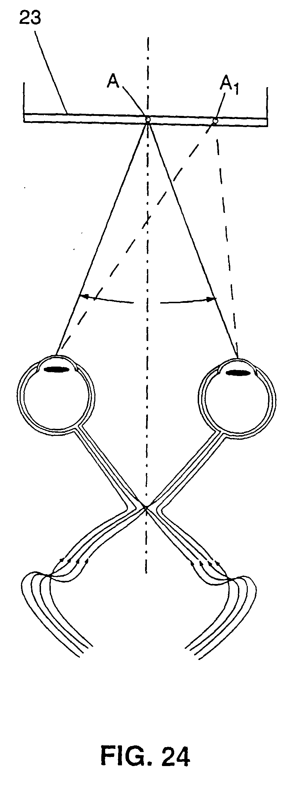

The vision process will be described in greater detail with reference to Figs. 23 and 24. The right and left optic nerves, 61 and 63 respectively, cross at the chiasma region 65 of the brain. Roughly seventy percent of the nerve fibers cross the chiasma region to the opposite lobe of the brain. The remaining nerve fibers are connected to the brain lobe on the same side as the eye. As a result, one eye vision is never truly one eye vision since both hemispheres of the brain receive signals from each eye. This partial "double-vision" provides additional support for the depth cue elements which, like convergence, are transmitted to both hemispheres of the brain.

The present invention takes advantage of confusing or misleading image convergence information to force the brain to bring back the missing depth perception information through analysis of depth cues available in a flat image. Elements of depth, viewed from the flat image through the curved prismatic screen of the present invention, are perceived by the brain as partially real. The present invention allows the brain to perceive the depth cues as real without eye convergence information suggesting to the brain that the image is flat.

Referring now to Fig. 24, a flat image is presented on a standard flat video screen 23. As a viewer's eyes move from point A on the screen to point A₁, the convergence does not change. Additionally, the eyes remain focused at the same distance. The constant convergence and focus informs the brain that the observed image is flat.

In accordance with the preferred embodiment, a curved prismatic screen 25 placed in front of a flat video screen 23 causes the viewer to see a curved image 67. In this way, the convergence of the viewer's eyes varies as the eyes move from point to point on the image, indicating to the brain that the observed image is not flat. However, stereopsis "shifts" of image elements are not available to define for the brain which image elements are nearer and which are farther. Nonetheless, to reconcile conflicting image information, the brain interprets the depth elements remaining in the image and builds up an image with restored depth elements.

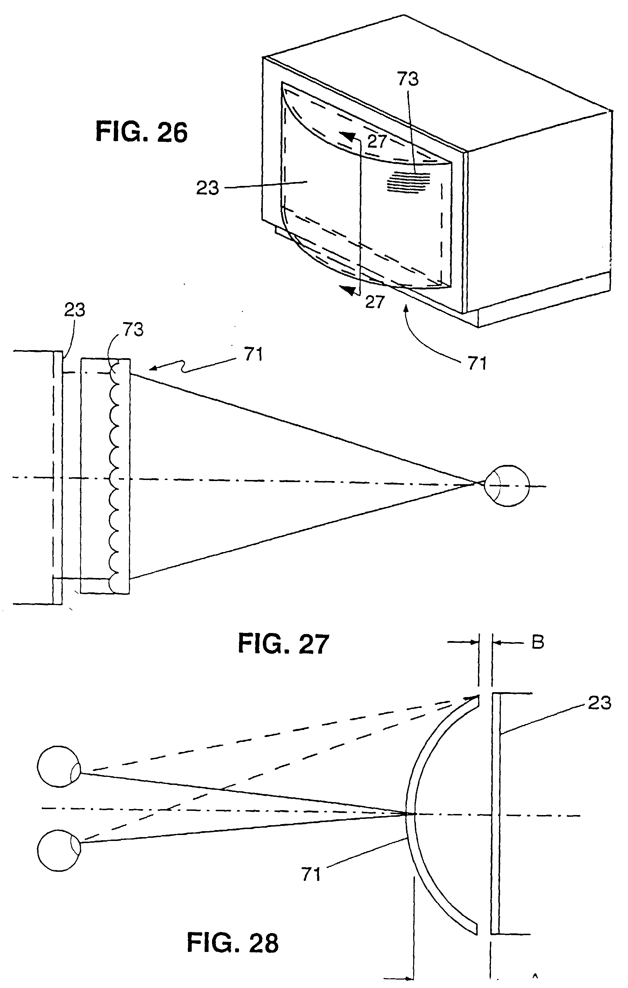

A less preferred embodiment is described in connection with Figs. 26-28. Fig. 26 is a perspective view of a curved lenticular screen 71 wherein the lenticulas 73 are placed on the surface of the depth of field screen curved in front of the video screen 23. Fig. 27 is a sectional view taken along lines 27-27 of Fig. 26, and more clearly illustrates the position of the lenticulas with respect to the video screen 23. As shown, the curved lenticular screen 71 includes a plurality of horizontal, cylindrical lenticulas 73 arranged generally parallel to the scan lines of the video monitor.

The focal distance of the curved lenticular screen 71 at the center point differs from the focal distance at the sides. Turning now to Fig. 28, the focal distance at the center of the screen is indicated by the distance A, whereas the focal distance at the sides is indicated by the distance B. To compensate for the differing focal distances across the depth of field screen, the lenticulas are formed with varying curvatures or diopters. Preferably the diopter of the lenticula is a function of the focal distance and varies along a continuum from the center of the screen to the respective edges.

In operation, the lenticular screen 71 curves and enlarges the video image to produce depth of field information in the perceived image. However, the lenticular screen tends to be relatively cumbersome and expensive to manufacture. Furthermore, the viewer is limited to a viewing distance within a fairly narrow range.

In addition to providing depth of field information, the present invention helps enhance the quality of a viewed image. This enhancement is based on optical considerations as well as on physiological and psychological aspects of vision. Briefly, the present invention enhances the quality of a viewed video image by increasing sharpness and contrast in the perceived image. Additionally, for example, a large portion of electronic "noise" and "grain" may be eliminated from images that have been transferred from film to videotape.

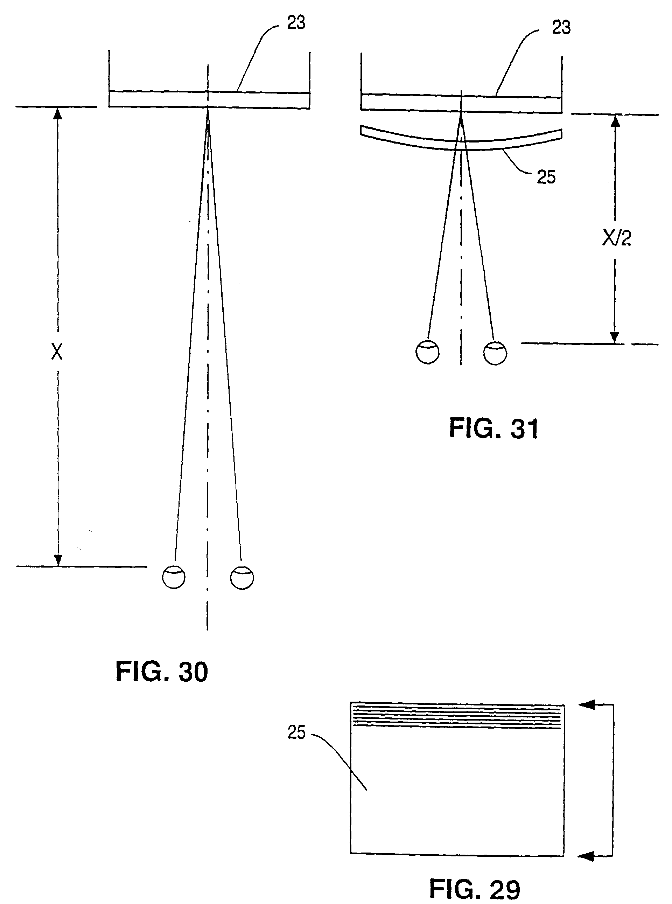

Referring to Fig. 29, the prism structure of a depth of field screen 25 appears as a miniature horizontal grid arrangement which restructures the video image lines into smaller elements. Even with flat screens which do not provide depth of field viewing, improved image quality may be obtained by restructuring the video image lines into smaller elements. When viewing a 19" video screen 23 having 400 lines of image resolution, the scan lines are visible up to a distance x in Fig. 30. However, with reference to Fig. 31, a depth of field screen 25 which provides 1200 lines of resolution reduces the distance at which the image resolution lines disappear to x/2. Hence, viewers can observe the image more closely without seeing individual scan lines.

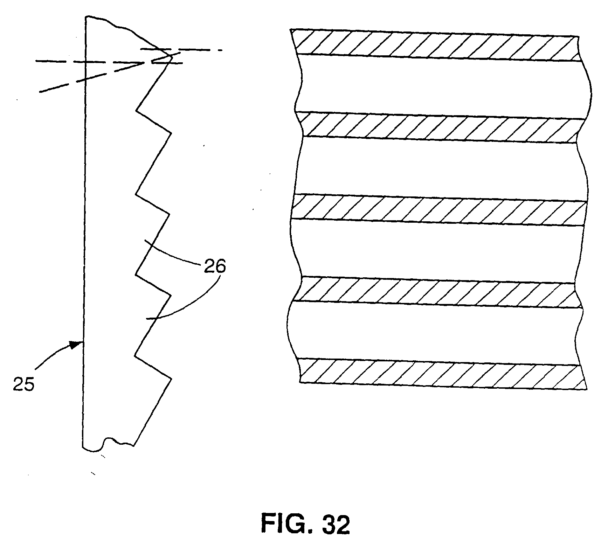

A magnified sectional side view of a depth of field screen 25 is shown in Fig. 32(a). Fig. 32(b) is a corresponding front view of the depth of field screen of Fig. 32(a). As illustrated in Fig. 32(a), microprisms 26 are arranged vertically one above the other. From the front view of Fig. 32(b), the microprisms 26 appear to be separated by horizontal lines. At very close viewing the horizontal lines appear as a microscopic grid. As will be described below in greater detail, this microscopic grid improves the viewed image quality.

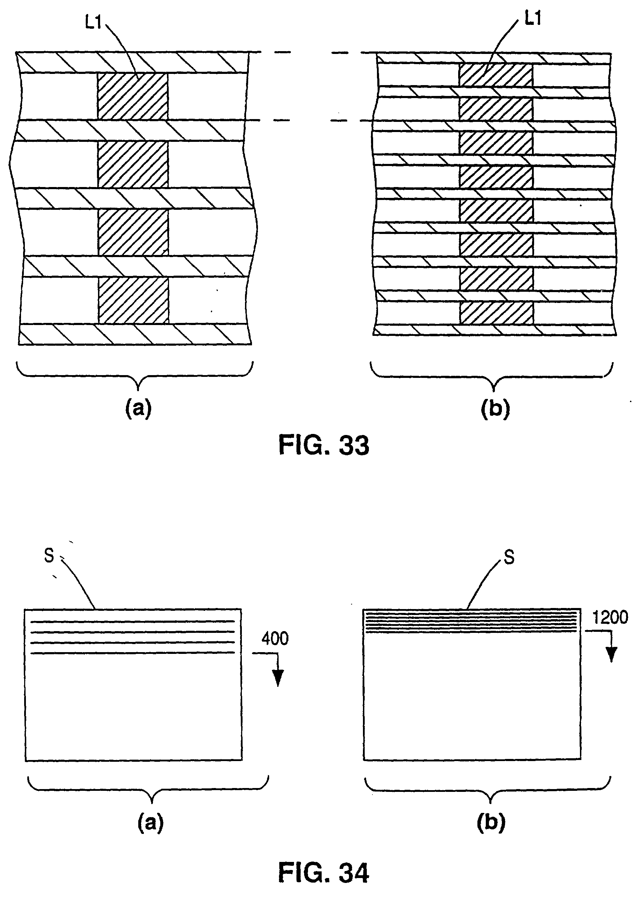

Turning now to Figs. 33(a) and 33(b), a vertical line L₁ is shown as viewed on a standard video screen and through a depth of field screen, respectively. As can be seen in Fig. 33(b), the depth of field screen breaks the image lines of the vertical line L₁ into smaller divided elements. For example, with reference to Figs. 34(a) and 34(b), a standard video image with 400 lines of image resolution (Fig. 34(a)) may be viewed through a depth of field screen with 1200 resolution lines (Fig. 34(b)). Each video image resolution line in the original video image is viewed through two prisms of the depth of field screen. Hence, the vertical line element of the original image on the video screen is divided twice by the prisms of the depth of field screen. As noted above, this effect reduces the distance at which the image resolution lines are visible to a viewer.

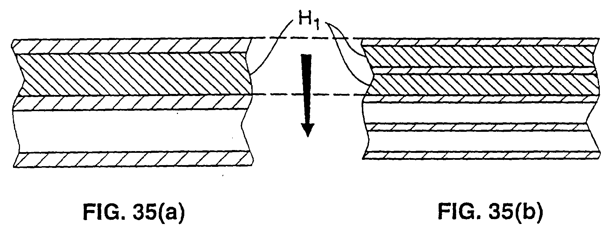

Fig. 35(a) illustrates a horizontal video image line H₁ which is moving downward in the direction of the arrow. Fig. 35(b) illustrates the same horizontal video image line as viewed through a depth of field screen. As can be seen, the horizontal line is divided by the depth of field screen into two smaller lines. The image "switches" from one groove of prism lines to the next as it moves downwardly. As a result, the horizontal line H₁ disappears momentarily before reappearing again in the next prism groove, appearing to fade in and out. The frequency at which the image signals are interrupted improves the perceived image sharpness and contrast.

A video image includes a large number of pixels arranged in lines. These pixels are selectively illuminated to form the video image. However, grain or noise in the video image causes a number of pixels to be illuminated seemingly at random, thereby distorting the video image and reducing its sharpness and stability. Restructuring the video image in accordance with the present invention effects the noise or grain elements of the image to thereby improve the perceived video image.

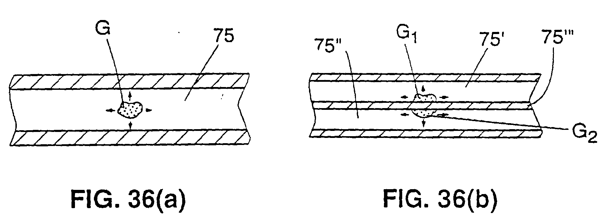

A grain element G is shown in Fig. 36(a), as viewed on a standard video screen. The same grain element, when viewed through a prismatic depth of field screen, is restructured into smaller grain elements G₁ and G₂, as shown in Fig. 36(b). More specifically, a video scan line 75 is divided by the depth of field screen into two prismatic screen line elements 75' and 75". A dark zone section line 75"' separates the line elements 75' and 75". Due to the relatively small size of the individual grain elements G₁ and G₂, the grain is less visible when the image is pieced together by the brain, thus providing an image with increased sharpness. The small grain elements tend to be perceived as a single element, without the empty space in between being perceived. As a result, the depth of field screen improves the resolution of the viewed image. To enhance image contrast, light reflections from bright objects and light sources placed in front of the video screen should be eliminated. This is particularly important, for example, in operating room environments which, typically, are brightly illuminated. In accordance with another aspect of the present invention, an anti-reflection coating is provided on the depth of field screen to help eliminate light which is reflected from the exterior surface of the depth of field screen, light which is reflected in the screen prisms, and light which passes through the depth of field screen and is reflected from the flat video screen.

Preferably, an anti-reflection coating is applied to both the front and rear surface of the depth of field screen. The coating is ideally a broadband anti-reflection coating having a reflectance R less than approximately 0.4% over the applicable wavelength regions. Scatter and absorption loss over the wavelength region is preferably less than 0.25%. Furthermore, the anti-reflection coating should be insoluble in water, acetone, alcohol, detergents and most acids.

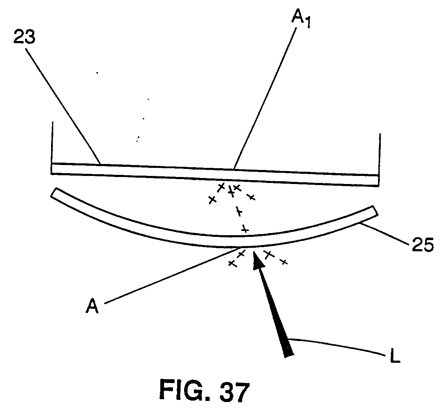

As shown in Fig. 37, a depth of field screen 25 which has been coated with an anti-reflection coating is placed in front of a video screen 23. A light beam L directed at the video screen strikes the depth of field screen at point A and, to a large extent, is absorbed by the anti-reflection coating. Accordingly, light is not reflected back into the eyes of the viewer. Additionally, light is prevented from reaching the video screen 23, leading to increased contrast of the image. In short, when coated with the anti-reflection coating, the depth of field screen operates as a shield preventing unwanted light A' from reaching the video screen 23. Of course, further shielding may be provided, for example, by the light shading hood 31 of Fig. 6.

In addition to the features and advantages noted above, the present invention helps reduce eye fatigue caused by prolonged viewing of a video screen. According to medical and scientific research reported in 1993 by the New England Journal of Medicine, eye fatigue associated with prolonged computer use may result in blurred images, redness of the eyes, over-sensitivity to bright objects, irritation caused by diminished cleansing of the eye surface by blinking, reduced ability to concentrate, a burning sensation in the eyes, and headaches. It has been shown that when a person looks for any extended period of time at a flat image on a computer screen, the eyes tend to become strained and build up tension. Furthermore, frequency of blinking may be reduced to one-third the normal rate. Eyelids effectively work like windshield wipers as they blink. The movement of the eyelids triggers moisture which helps to eliminate inflammation caused by bacteria, and further cleanses the eye surface. Also, blinking allows a brief resting period to the portion of the brain that controls vision. Medical and work place studies have shown eye fatigue and the associated effects to be a major problem for computer operators who, after several hours of computer use, tend to become highly unproductive.

The present invention helps reduce problems associated with eye fatigue. Referring again to Fig. 12, when an image is viewed through the depth of field screen, convergence and focal distances are no longer constant as the eyes move to different points on the image. As a result, problems resulting from viewing a flat image are reduced. The depth of field screen helps reduce eye fatigue by reducing reflected light by eighty percent or more, by restoring most of the depth in a normal image to increase eye blinking, by relieving tension that leads to eye fatigue, and by helping the eyes to function more like they do in normal depth of field viewing.

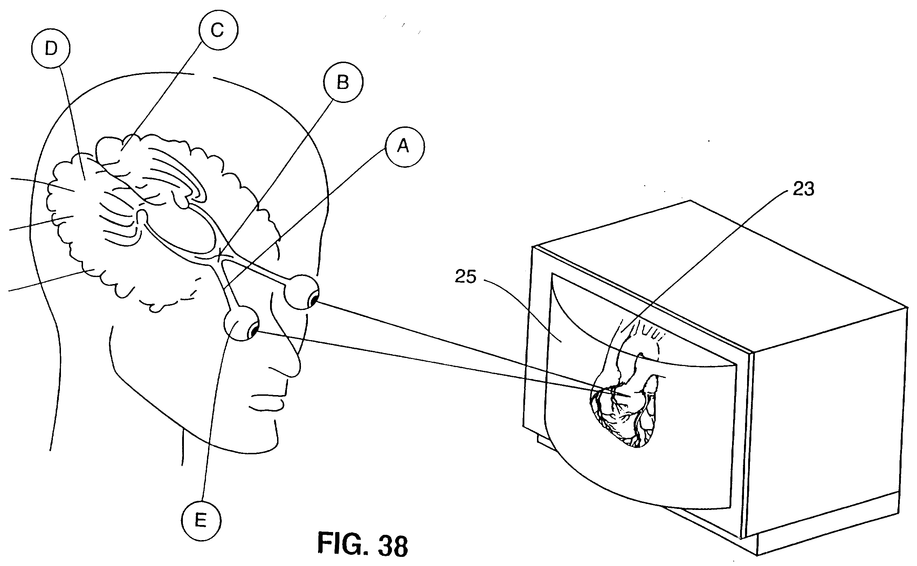

A summary of the operation of the depth of field screen in accordance with the present invention is described in connection with Fig. 38. The depth of field screen provides an improved image due to the response of the brain to image elements perceived by the eyes viewing an image through a screen 25 placed in front of a flat image video screen 23. Characteristics of the effect of the depth of field screen 25 on the perceived image are described below.
(A) A flat video screen does not provide a visual disparity such as is provided with a regular stereo image. However, when a viewer looks at the flat image through the depth of field screen, convergence of the viewer's eyes varies as the eyes move from point to point on the image. This provides a signal to the brain that the image is not flat. As a result, the brain analyzes depth cues present in the image to add the depth elements missing due to the lack of stereopsis.
(B) Optic nerves crossing the chiasma region of the brain supply depth cue information to both hemispheres of the brain. Partial "double vision" is provided since only a portion of optic nerve fibers (about 70%) cross the chiasma region to the opposite hemisphere. The present invention takes advantage of the resulting depth cue support to help provide a depth of field image.
(C) Depth cues in a perceived image are supplemented by memory experiences for similar objects. These memory experiences are both inherited and learned. Such memory experiences may be stored, for example, in the motion depth portion 79 of the brain or in the color depth section 81 of the brain. The vision process analyzes an image observed by the eyes (including depth cues) in conjunction with the memory experiences to more fully understand the image.
(D) The grid-like image provided by the multi-prism screen restructures grain images and electronic noise into smaller elements, which are combined in a perceived image. The resulting image has improved sharpness.
(E) By changing a flat image into a depth image, the depth of field screen forces the eyelids to maintain the rate of blinking at near normal value, thus reducing eye fatigue and irritation. Blinking also permits the vision command portion 83 of the brain to rest briefly. The anti-reflection coating on the depth of field screen further reduces eye strain by minimizing glare. Additionally, the anti-reflection coating increases image contrast and provides a more realistic image.

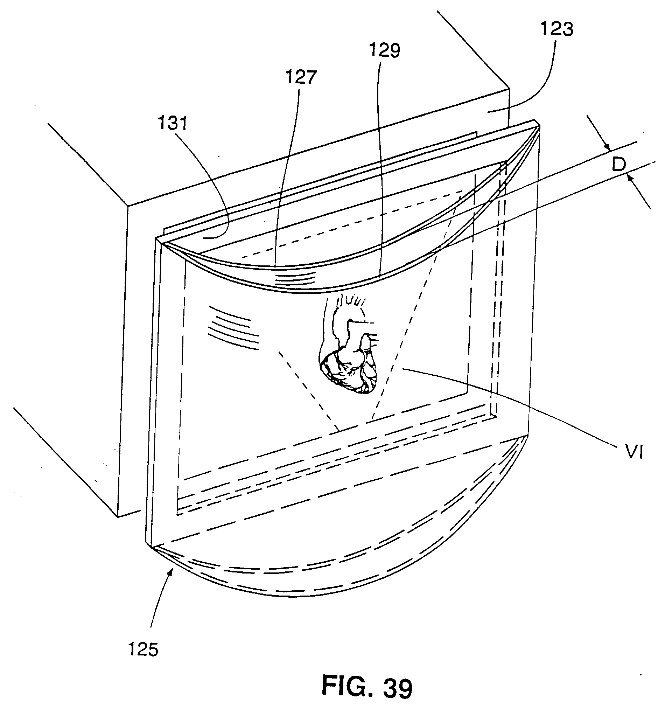

A further embodiment of the present invention, and its operation in connection with these characteristics, is described in connection with Fig. 39, which relates to the display of an image from a sonic imaging probe. Sonic imaging, such as echo-sonar, acoustic or ultrasonic devices, is employed in numerous technical applications. One such application of extreme importance is as a safe alternative to X-ray imaging in examining interior portions of the human body. Typically, however, such applications provide relatively poor quality images which project shadows of objects such as internal organs, rather than clearly defining the shape. Furthermore, these images are often largely distorted by amplified electronic noise. Accurately reading such images requires a great deal of practice and expertise, and still involves a degree of interpretation.

In Fig. 39, a video monitor 123 produces an image V1. A double depth of field screen 125 is arranged in front of the video monitor 123, and includes a pair of curved prismatic screens 127 and 129 mounted adjacent one another on a frame 131. As shown, the double screen 125 includes an inner screen 127 and an outer screen 129. The screens 127 and 129 are preferably separated at their vertical center lines by a distance D. For a 19" (48 cm) video monitor, the value D may be approximately two inches (5.1 cm). The frame 131 may be interchangeable and may be adapted to fit within the depth of field housing discussed in connection with Figs. 5 and 6.

In operation, the inner prismatic screen 127 restructures each of the four hundred resolution lines of the video image into three lines -- i.e., two image lines and one dividing line. The resulting twelve hundred lines are further restructured by the outer prismatic screen 129 into additional resolution lines. Accordingly, the displayed acoustic image is restructured into very small elements and has substantially reduced grain. The curve of the double prismatic screen 125 also causes the viewed image to be analyzed in accordance with shadow depth cues, supplemented with visual memory experiences. As a result, the shape of the perceived image of the internal organ or the like is more readily seen.

When viewing a sonic image of the human heart on a standard video monitor, the screen is cluttered with electronic noise. This noise makes it very difficult for the attending physician to examine the heart effectively because the image is continually breaking up. The same sonic image, however, when viewed through the double prismatic screen of Fig. 39, provides the physician with not only an image of the heart's shape, but also with clearer information concerning the structure of the heart chambers and valves. To enhance depth of field viewing of sonograms, echocardiography and MRI images, a blue filter -- mired shift 68 with a 52% transmission, can be placed at the rear of the prismatic screen 127.

The preferred process for manufacturing prismatic screens in accordance with the present invention is discussed in conjunction with Fig. 40. Of course, manufacturing techniques will vary in accordance with the particular needs of the application and the transparent material that is selected for the prismatic screen. A continuous sheet or film 131 of plastic screen material may be passed along a conveyor or other suitable transport apparatus. Hot air is directed through a supply hose 133 to a distribution plenum 135 arranged over the plastic sheet 131. The hot air softens the plastic material before the prisms are cut, making the resulting prisms optically clearer and eliminating the necessity of an extra polishing step.

A standard milling machine arm 137 is provided with a conventional diamond cutting tool 139 for cutting the prism lines 141 in the screen material 131. The milling machine arm 137 may be tilted by an angle a if square prisms are not desired. The milling arm 137 may be part of any standard milling device and preferably operates under computer control. To speed the milling process, the milling tool can be operated by a turbine which drives the tool up to 100,000 rpms.

Another process for manufacture of the prism structures for the curved prismatic screen involves constructing a rotating drum under which a sheet or film of heated plastic is passed. The drum includes a grid pattern which is pressed into the softened plastic as it passes beneath the drum to form the prism structures. Once the screen has cooled, it should be polished to optical grade. The sheet may then be cut to size and placed in an appropriate frame.

Following cutting of the prism lines, the sheet 131 passes coating electrodes 143 and 145 for application of the anti-reflection coating in a conventional manner. After the anti-reflection coating is properly set, the sheet may be cut to length and mounted in a frame for use as described above.

Another embodiment of the present invention, when attached to a 19" (48 cm) or 13" (33 cm) medical video monitor, is designed to permit the viewer to observe the 2" (5.1 cm) diameter, micro endoscopic image, magnified 1.5x to 2.0x. The image also appears to the viewer with improved resolution, with enhanced image detail and image depth cues, which are not recognizable in a less detailed video image.

In Laparoendoscopic/Endoscopic surgery procedures, the video image is transmitted directly from the inside of the patient's body to a 19" (48 cm) or 13" (33 cm) video monitor. Of particular importance is Micro Endoscopic procedures which are viewed through a micro fiber optic image conduit. The image is typically taken in a relatively low light environment, and the final image that appears on the 19" (48 cm) medical monitor is only 2" (5.1 cm) in diameter and is often noisy and characterized by relatively poor resolution quality.

Micro Endoscopic procedures for the Parotid tear duct, Lacrimal tear duct, breast exploration and reconstructive surgery, disorders of the spine, Neurosurgery of the brain and nerve system, inner ear, nose and throat (Otolaryngology), reconstructive plastic surgery, Fallopascopy, Gynecology, reproductive genetics and minimally invasive veterinary surgery are performed using scopes with fiber optic bundles that range in diameter from 0.3mm to 3.0mm. These difficult procedures have opened new avenues of improvement on surgery of the human body. Such procedures eliminate the need to open large operation areas and allows to reach into and see inside very small and narrow body ducts. It also reduces the patient's trauma, stress, danger of infection, and allows the patient in most cases to recover quickly.

With all the latest improvements in the lens, fiber optic, video camera, high resolution video monitor and actual technique in the different micro procedures the image quality transmitted to the video monitor often remains poor. The relatively poor quality is not only caused by the small size of the viewed image, but also results from poor sharpness and clarity of the image. This is the result of the lens at the end of the fiber optic conduit being only a minimum 1/50th of an inch in diameter of the environment in which the image is taken.

The 5.1 cm micro image transmitted through the fiber optic is focused into the video camera as a relatively small and dark image. The image is only 1/6th of the height of a 19" (48 cm) monitor screen, and occupies only 1/40th of the monitor screen surface. However, the 19" (48 cm) monitor is the monitor of choice for most surgeons for Micro Endoscopic procedures because on the 13" (33 cm) monitor the micro image is only 3.8 cm in diameter. It is often very difficult to perform micro procedures with such a small image.

Both the 19" (48 cm) and 13" (33 cm) medical video monitor images are constructed with the same components, the video image pixels (small electronic dots which form the raster of scanning lines which form the image). Both 19" (48 cm) and 13" (33 cm) basic video monitors contain the same amount of 200 scanning resolution lines. A raster scanning line, which runs the width of the video screen, is approximately 1.0mm high, 1/25th of an inch; and the space between the raster lines is normally 0.5mm, 1/50th of an inch. The thickness of the lines and the space between the lines creates 200 scanning lines of basic image resolution that fills, top to bottom, the video monitor screen.

In comparing the video image with a film image, the video image resolution is as much as 15 times lower. Quality photographic lenses are usually manufactured with 100 times better resolution (100 lines per 1.0mm).

Normal endoscopic video systems project the image to the full size of the video screen. This is because they are not restricted to the 1/24th of an inch (0.1 cm) diameter of the fiber optic light conduit and are equipped with a powerful light source to illuminate the viewing area. This, however, is impossible to achieve with the micro endoscopic imaging systems.

The micro endoscopic video system is an electronic and optical breakthrough in surgical technique that allows the small, confined areas of the human body like the tear duct and the spinal canal to be imaged. However, the poor image quality and its 5.1 cm diameter size has limited its application and effectiveness. It is for this reason that the present invention achieves significant improvement over the deficiencies of prior art television screen magnification screen systems and is an extension to micro endoscopic technology, which helps solve the surgeon's needs for an enlarged, enhanced quality, depth of field image as viewed on the video monitor screen.

Although the preferred embodiments are described in connection with medical imaging systems, applicability of the present invention may also be found in surveillance systems for gas and oil lines and sewers, which range in size from 6 inches (15.2 cm) to 36 inches (91.4 cm), building structure inspection, interior of mechanical motor inspection, military and police heat sensor night vision, military and commercial ship underwater surveillance, smart bomb testing, outer space transmissions that are viewed on a video monitor, commercial television, any future high definition television systems, and other environments in which image magnification, depth of field and/or improved image clarity and contrast are important. Other areas of application will be readily apparent to skilled artisans.

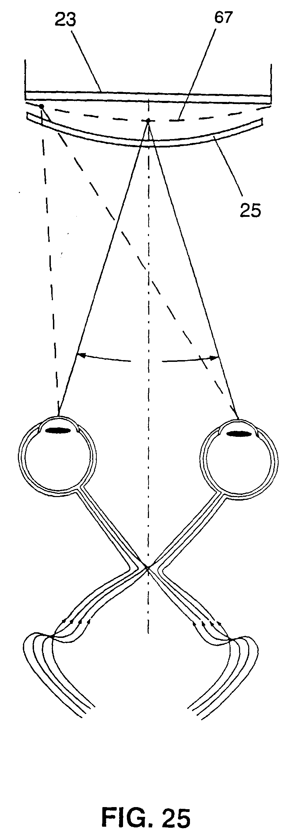

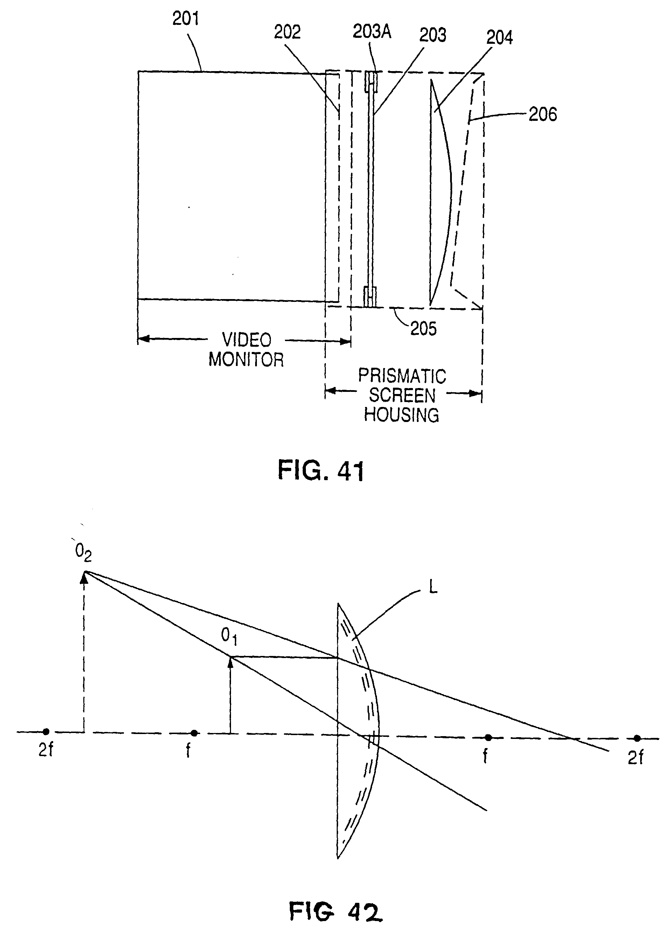

Referring now to Fig. 41, a 19" (48 cm) video monitor 201, includes a video screen 202. A housing 205 is attached in front of the video screen 202, and contains the mounted depth of field prismatic screen 203. The screen 203 is assembled in a frame 203A. As described above, the depth of field screen is a multi prismatic structure with a plurality of horizontal micro prisms which extend across the width of the inner surface of the depth of field screen 203. Particular reference is made to Figures 5-12, 25-36 and 39 and the accompanying written specification for a more detailed description of the depth of field screen.

A magnifying lens 204 placed in the front portion of the housing 205 provides stronger depth cue enhancement and magnifies the image for easier viewing. In relation to the 2" (5.1 cm) diameter micro image, the magnification does not exceed 2.0x. In relation to a full screen video image, the magnification does not exceed 1.5x. In accordance with this embodiment, the prismatic screen 203 and the lens 204 are designed as a single optical system. Without the prismatic screen, the lens 204 would magnify the image as well as the raster scan lines, making the image unacceptable. The prismatic screen as described above without the lens 204, does not magnify the image 1.5x to 2.0x.

The housing 205 attaches the optical elements to the front of the video monitor. Preferably, the front and rear portions of the housing are sealed with front and rear tempered glass windows, respectively, which are treated with anti-reflection coatings. The lens 204 may be an acrylic plano convex lens which is designed to provide focus and convergence separation. The focal length of the lens 204 is relatively long, preferably about 30 inches (76.2 cm), but advantageously may range from 10" (25.4 cm) to 40" (101.6 cm). The lens 204 is preferably mounted about 5 inches from the video screen.

The prismatic screen 203 is placed between the lens 204 and the video screen to provide additional focus and convergence information, and to reduce the size of video raster lines by three times. The prismatic screen is preferably mounted near the video screen with the "rows" of prism lenses running parallel to the video scan lines. The interior portion of the housing is preferably blackened to separate the viewed image from ambient light and reflections, which also helps to strengthen depth cues. Preferably, the outside front portion of the housing includes a black frame which tilts the optical front window 206 by 5° to 10° toward the inside of the housing to help eliminate reflections of bright objects and ambient light that may be present in front of the glass window.

The manner in which viewers eyes perceive depth cues is described above with particular reference to Figures 13 to 22. Additionally, the manner in which the prismatic screen reduces the raster of video scanning lines is described with reference to Figures 31 to 36B. In the present embodiment, the plano convex lens 204, when combined with the prismatic screen also serves as a depth cue enhancement lens. The screen 203 and the lens 204 are designed as a single optical system 203 - 204.

Fig. 42 illustrates how a plano convex lens magnifies a video image. A viewed object O₁ is magnified by the lens L to provide a magnified object image O₂. In the preferred embodiment, the eye viewing distance to the lens is variable and the focal length of the lens is preferably a relatively long focal length.

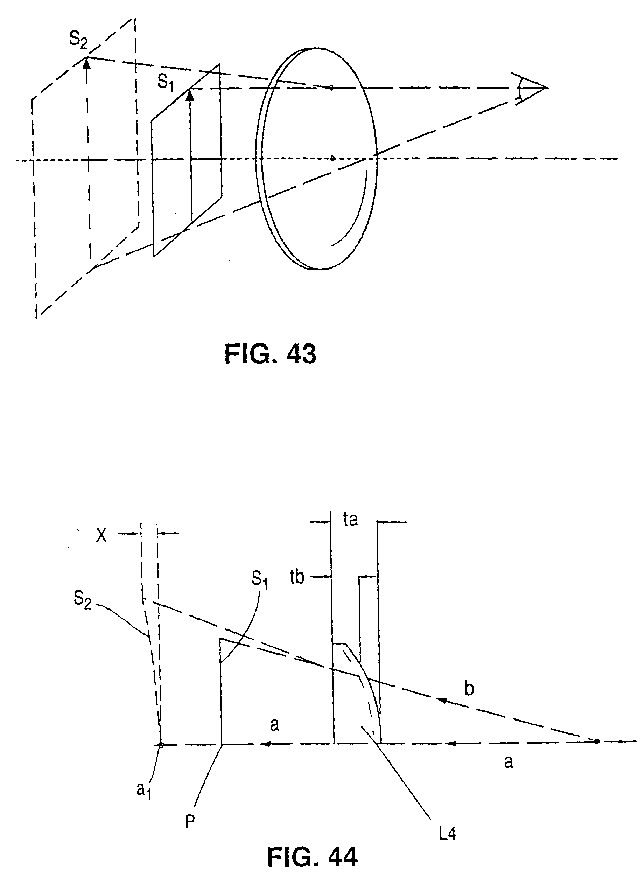

Fig. 43 illustrates how the long focal length lens is used in the present invention. In a preferred embodiment, the magnification of the video screen S1, to the virtual image S2, is accomplished with a 25 inch diameter lens having a focal length of 762 mm and placed at the distance of 126 mm from the video screen. Since the primary object in the design of the lens is to strengthen the depth cues in the video image, the magnification can be kept as low as 1.5x, which is below the distortion range caused by image magnification.

Fig. 44 illustrates the manner in which depth cues are enhanced. When a light beam passes through a transparent structure of glass or plastic, depending on the refraction index and the thickness of the structure, the image will focus at a shorter distance. When the structure is a plano convex lens, the image will be focused at a shortened distance "a" at the center of the lens, where the lens is thicker. Light passing through the thinner peripheral portions of the lens will be focused at "b". By using BK7 glass, which has a refraction index of 1.5163, the effective length of the light beam is shortened by about 1/3 of the BK7 glass thickness, and less at the edge of the lens.

A planar image p at the location of the screen S1 is seen through the lens 204 as a slightly curved image S2. This added curvature separates focus and convergence distances perceived by the eye and enhances the depth cues present in the planar image. As shown in Fig. 44, a light beam a passing through the central portion of the lens 4 encounters a lens thickness **t**_{**a**}. On the other hand, the light beam b passes through a peripheral portion of the lens 4 having a reduced thickness **t**_{**b**}. The lens causes focus displacing (shifting) across the image of BK7 glass approximately X = tₐ/3 - t_{b}/3. The shifting "X" causes an inconsistent reading of the eye focus and convergence relative to the planar video image **p**.

The image shifting caused by the lens provides a similar effect to the prismatic screen as described above. The lens and the prismatic screen combined into a single optical system causes an increased focus and a convergence displacement, which cuts off the convergence ability of the eyes to indicate to the viewer that the video image is flat. This allows the brain to analyze the depth cues to be perceived as real depth.

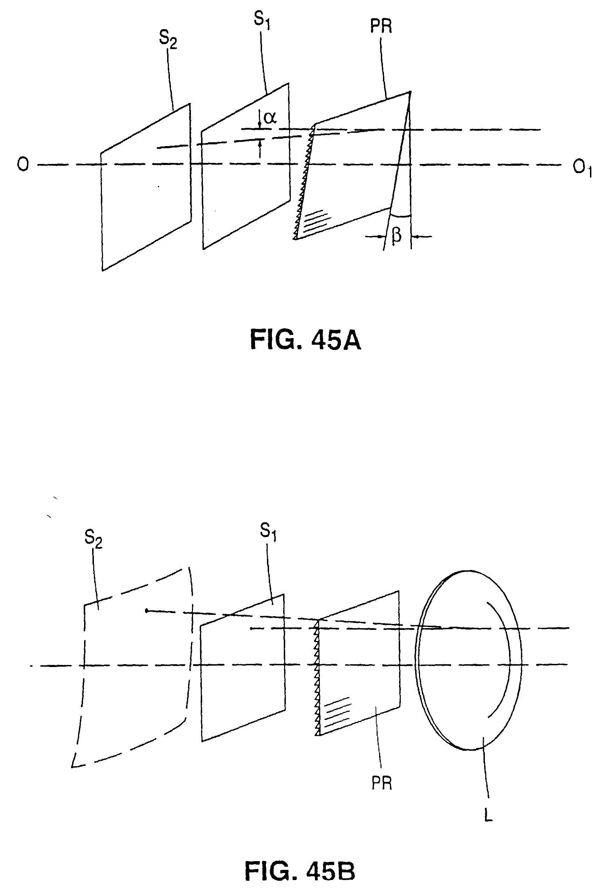

Fig. 45A illustrates the arrangement of the prismatic screen PR, the video screen S1 and the virtual image S2. The virtual image S2, appears behind the video screen S1, shifted down by the angle alpha. This image shifting is also related to the tilt of the prismatic screen angle beta. A typical value for the angle beta would be approximately 60°.

Fig. 45B illustrates the optical system of Fig. 45A combined with the lens L into a single optical system. The resultant virtual image S2 is magnified, causing a stronger focus and convergence displacement, and therefore a stronger depth cue effect enhancement. In addition, as described above, particularly with reference to Figs. 29 to 36b, the prismatic screen PR preferably includes three miniature prisms for each video scan line. As a result, each raster video scanning line is divided into three, thereby providing a significant reduction in visibility of raster video scanning lines.

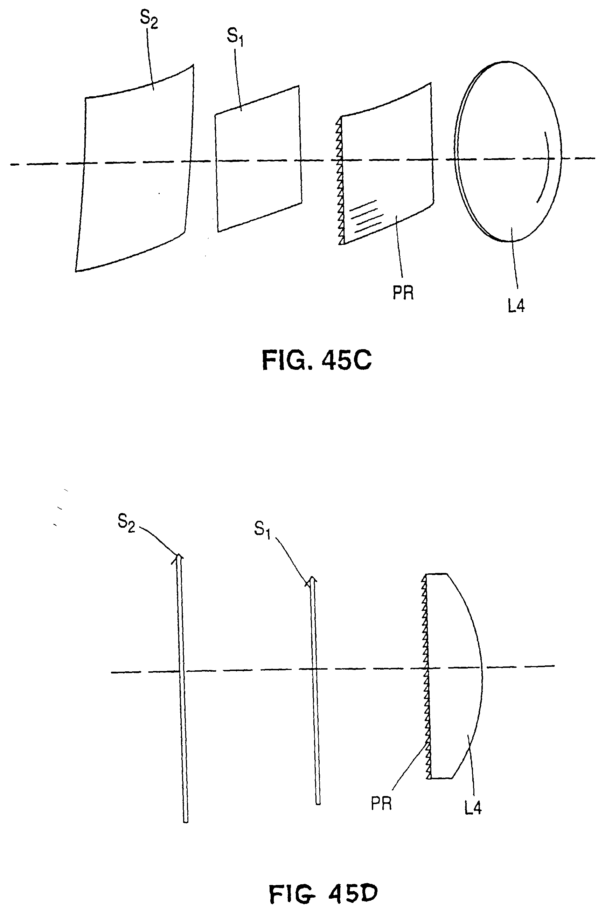

Fig. 45C illustrates a design configuration similar to that shown in Fig. 45B, but the prismatic screen PR is curved from side-to-side along the horizontal axis. To accommodate the curved prismatic screen PR, the lens L is changed from spherical to non-spherical, and is designed to follow the curve of the prismatic screen. This arrangement corrects image distortions for an increased angle of viewing of the image.

Fig. 45D illustrates a side view of another configuration similar to the arrangement of Fig. 45B. As shown in Fig. 45D, the prismatic screen PR may be applied directly to the plano surface of the plano convex lens L by any known technique. For example, the micro prisms may be etched, rolled or milled with high precision directly in the surface of the lens 204. Alternatively, the prisms could be mechanically or chemically attached appropriately to the lens. S1 is the video image, S2 is the magnified video image.

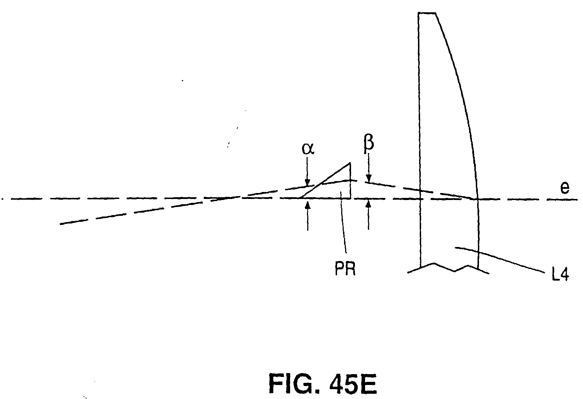

Fig. 45E illustrates the light beam path being directed by the lens 204 and by a single prism section of the prismatic screen PR. The light beam from the lens 204 enters the prism on the angle beta, thereby modifying the prismatic screen's design angle alpha, according to the focal length and the refraction index of the lens 204.

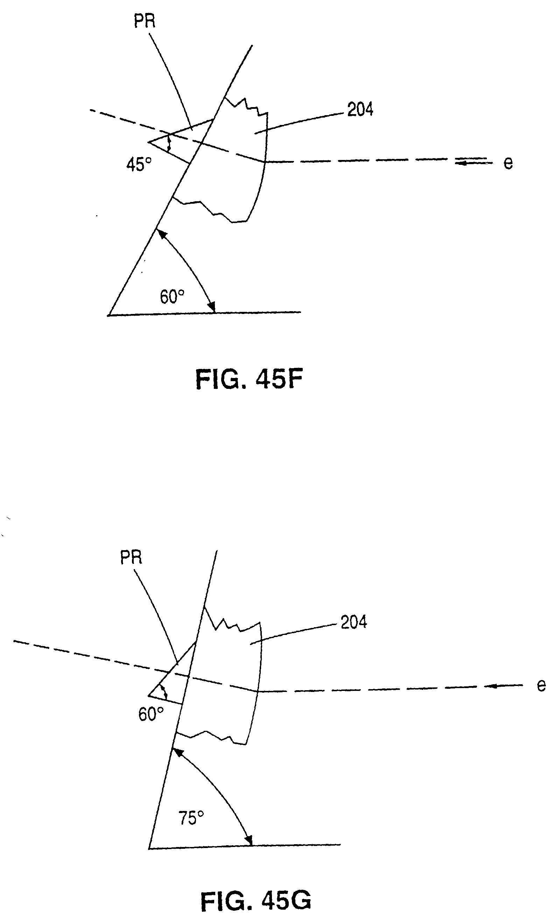

Fig. 45F shows a section of lens 204 which is laminated, cemented, rolled, etched or milled directly to the prismatic screen PR. For clarity, only a section of the prismatic screen is illustrated. The prismatic screen has a prism angle of 45° and the plano surface of the lens 204 is tilted 60° from the viewing axis. Fig. 45G illustrates an alternative embodiment wherein the prismatic screen PR has a prism angle of 60° and the plano surface of the lens is tilted 75° from the viewing axis. Assuming a horizontal viewing axis, the lens 4 is preferably placed in a more upright position as the prism angle increases.

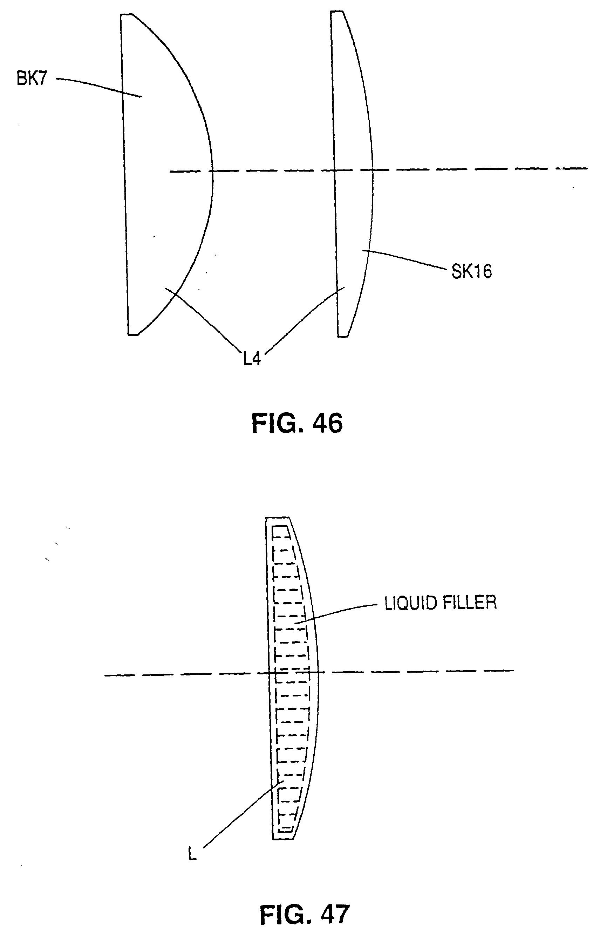

Figs. 46A, 46B and 47, show different designs of the lens 204. Fig. 46A illustrates the same lens 204 described in connection with the system of Fig. 45B. In Fig. 46B, the lens 204, instead of being made from BK7 glass (having a refraction index of 1.5163), is made with SK16 glass which has a higher refraction index of 1.6204. The lens also can be made from acrylic and polycarbonate plastic materials having a relatively high index of refraction. By using a material with a higher refraction index the center thickness (Fig. 46B) and therefore the weight of the lens can be reduced.

Fig. 47 illustrates a design of a hollow plano convex lens which is similar to the lens in Fig. 45B. The lens is manufactured as an empty, molded, cut and polished element which is then filled with a high refractive index liquid and sealed. Even with difficulties in sealing the edges to prevent leaking of the high index liquid, this design is still cost efficient and reduces the weight of the entire system.

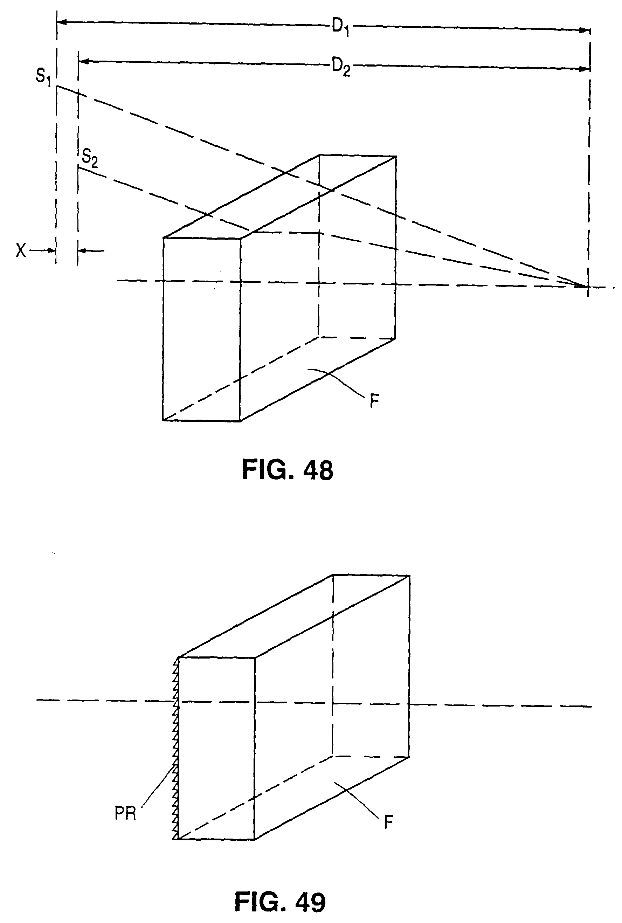

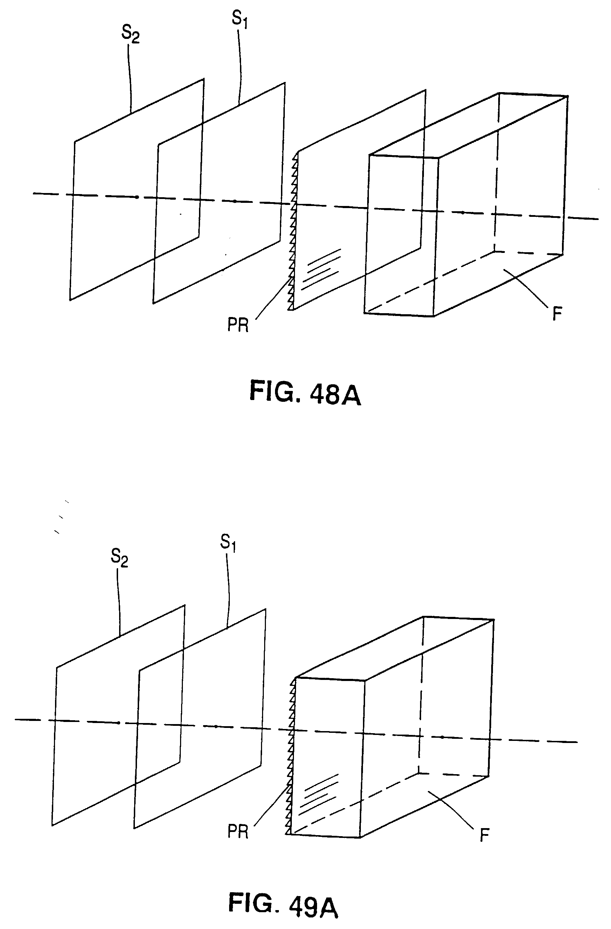

Referring now to Fig. 48, when magnification of the video image is not desired or needed, the lens 204 may be replaced with an optically flat plate F having a thickness, for example, of 1 inch (2.54 cm). The thick plate operates in a manner similar to the lens 204 by shortening the length of the light beam passing through the transparent plate by approximately 1/3 of the glass thickness; X = D₁ - D₂. As illustrated in Fig. 8A, the virtual image S2 appears in front of the video screen S1. As with the systems utilizing the plano convex lens, the system of Fig. 48A causes a focus and convergence displacement which enhances the depth cues of the viewed image.

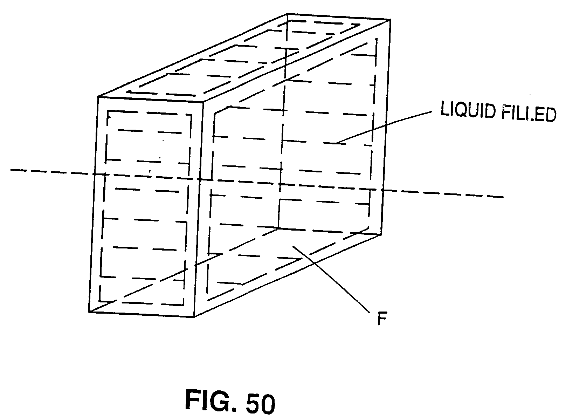

Figs. 49 and 49A illustrate the plate from Fig. 48 with the prismatic screen surface PR, applied to the flat surface of the transparent plate F. Fig. 50 shows the optically flat plate replaced by a hollow molded or cut plate which is filled with a high refraction index liquid and sealed.

The principles, preferred embodiments and modes of operation of the present invention have been described in the foregoing specification. The invention which is sought to be protected herein, however, is not to be considered as limited to the particular forms disclosed, since these are to be regarded as illustrative rather than restrictive. Variations and changes may be made by those skilled in the art without departing from the spirit of the invention. For example, the present invention is not limited to viewing of a video screen image, but may be used in viewing any image which includes recorded depth cues. Such images include computer images, high definition television images, projected film images, still photographs and slides, transparencies, printed images and works of art.

## Claims

1. An apparatus for depth of field viewing of flat images by restructuring the images to restore depth in the image through interchange of perceived depth cues in place of stereopsis, characterized by:
a first transparent screen (25, 45, 51, 71, 127, 203) for positioning between a flat image and a viewer, said first transparent screen having a center portion and two side portions, and being curved across its width such that the center portion of the screen is arranged at a distance from the flat image greater than that of the side portions; and
a first plurality of optical elements (26, 73) formed in said first transparent screen and extending horizontally across the width of the screen, each of said optical elements being vertically spaced one above the other.

2. The apparatus of Claim 1, wherein said optical elements are prisms (26) which extend across the width of said first transparent screen.

3. The apparatus of Claim 2, wherein said prisms (26) are provided at a density from 60 prisms per linear inch (23.6 prisms/cm) to 160 prisms per linear inch (70 prisms /cm).

4. The apparatus of Claim 2 or 3, wherein the sides of the prism (26) define an angle from 60° to 95°.

5. The apparatus of Claim 4, wherein the prisms (26) are tilted at an angle from 0° to ±40°.

6. The apparatus of Claim 4, wherein the prisms (26) are symmetric.

7. The apparatus of Claim 1, wherein said optical elements are cylindrical lenticulas (73), said lenticulas having a diopter which varies across the width of the first transparent screen as a function of the distance of the screen from the flat image.

8. The apparatus of one of Claims 1-7, further comprising a frame (27, 131, 203A) for said first transparent screen, said frame being adapted to mount the screen on a video monitor.

9. The apparatus of Claim 8, wherein said frame includes a light hood (31) for shielding the first transparent screen and the flat image from ambient light.

10. The apparatus of one of Claims 1-9, wherein said first transparent screen includes an anti-reflection coating.

11. The apparatus of Claim 1, further comprising a second transparent screen (129) provided adjacent said first transparent screen (127), said second transparent screen including a second plurality of optical elements (26, 73) formed in said second transparent screen and extending horizontally across the width of the second screen, each of said optical elements being vertically spaced one above the other.

12. The apparatus of Claim 11, wherein at least one of said first plurality of optical elements and said second plurality of optical elements comprises prisms (26).

13. The apparatus of Claim 12, wherein at least one of said first transparent screen and said second transparent screen includes an anti-reflection coating.

14. An apparatus for depth of field viewing of flat images by restructuring the images to restore depth in the image through interchange of perceived depth cues in place of stereopsis, characterized by:
a transparent screen (203) for positioning between a flat image and a viewer, said transparent screen including a plurality of microprisms (26) formed in said transparent screen and extending horizontally across the width of the screen, each of said microprisms (26) being vertically spaced one above the other; and
an optical element (204) positioned between said transparent screen and the viewer, said optical element operable to adjust the effective paths of light transmitted through said transparent screen.

15. The apparatus of claim 14, wherein said optical element is a plano convex lens.

16. The apparatus of claim 15, wherein said lens has a focal length of at least 10 inches (25.4 cm).

17. The apparatus of claim 16, wherein said focal length is approximately 30 inches (76.2 cm).

18. The apparatus of claim 15, wherein said microprisms (26) form angles in the range of 30° to 80° and said convex lens magnifies the viewed image from approximately 1.5 to 2.0 times.

19. The apparatus of claim 14, wherein said optical element is a transparent plate having spaced parallel faces.

20. The apparatus of claim 19, wherein a liquid material having a refractive index of at least 1.5 is provided between the spaced faces of said transparent plate.

21. The apparatus of claim 14, wherein said transparent screen is curved across the width of the screen and said optical element is a non-spherical convex lens.

22. The apparatus of claim 14, wherein said optical element is provided as part of said transparent screen.

23. The apparatus of claim 22, wherein said optical element is a plano convex lens, and said plurality of microprisms is formed in the plano surface of the lens.

24. The apparatus of claim 23, wherein said microprisms form angles in the range from 40° up to 90°, and wherein said lens is tilted from 60° down to 30° relative to an axis perpendicular to the viewing axis.

25. The apparatus of claim 23, wherein said microprisims form angles in the range from 40° down to 5°, and wherein said lens is tilted from 60° up to 90° relative to an axis perpendicular to the viewing axis.

26. The apparatus of claim 22, wherein said optical element is a transparent plate having spaced parallel faces, and said plurality of microprisms is formed in the plano surface of the plate.

## Patentansprüche

1. Eine Vorrichtung zum tiefenscharfen Betrachten von ebenen Bildern durch Restrukturierung der Bilder, um die Tiefe in dem Bild wiederherzustellen durch Austausch von wahrgenommenen Tiefenmarkierungen, anstelle von stereoskopischem Sehen, **gekennzeichnet durch:**
einen ersten transparenten Schirm (25, 45, 51, 71, 127, 203) zum Positionieren zwischen einem ebenen Bild und einem Betrachter, wobei der genannte erste transparente Schirm einen Zentralbereich und zwei Seitenbereiche aufweist und über seine Breite derart gekrümmt ist, daß der Zentralbereich des Schirms mit einer Entfernung von dem ebenen Bild größer als diejenige der Seitenbereiche angeordnet ist; und
eine erste Mehrzahl von optischen Elementen (26, 73), die in dem genannten ersten transparenten Schirm gebildet und sich horizontal über die Breite des Schirms erstrecken, wobei jedes der genannten optischen Elemente oberhalb des anderen vertikal beabstandet ist.

2. Die Vorrichtung nach Anspruch 1, bei welcher die genannten optischen Elemente Prismen (26) sind, die sich über die Breite des genannten ersten transparenten Schirms erstrecken.

3. Die Vorrichtung nach Anspruch 2, bei welcher die genannten Prismen (26) mit einer Dichte von 60 Prismen pro lineares Inch (23,6 Prismen/cm) bis zu 160 Prismen pro lineares Inch (70 Prismen/cm) vorgesehen sind.

4. Die Vorrichtung nach Anspruch 2 oder 3, bei welcher die Seiten der Prismen (26) einen Winkel von 60° bis 95° definieren.

5. Die Vorrichtung nach Anspruch 4, bei welcher die Prismen (26) unter einem Winkel von 0° bis ± 40° geneigt sind.

6. Die Vorrichtung nach Anspruch 4, bei welcher die Prismen (26) symmetrisch sind.

7. Die Vorrichtung nach Anspruch 1, bei welcher die genannten optischen Elemente zylindrische Linsen (73) sind, wobei die genannten Linsen eine Dioptrie aufweisen, welche über die Breite des ersten transparenten Schirms als eine Funktion der Entfernung des Schirms von dem ebenen Bild variiert.

8. Die Vorrichtung nach einem der Ansprüche 1 bis 7, ferner einen Rahmen (27, 131, 203A) für den genannten ersten transparenten Schirm aufweisend, wobei der genannte Rahmen dazu befähigt ist, den Schirm an einem Videomonitor anzubringen.

9. Die Vorrichtung nach Anspruch 8, bei welcher der genannte Rahmen eine Lichthaube (31) zum Abschirmen des ersten transparenten Schirms und des ebenen Bildes gegenüber Umgebungslicht aufweist.

10. Die Vorrichtung nach einem der Ansprüche 1 bis 9, bei welcher der genannte erste transparente Schirm eine Antireflektionsbeschichtung (Vergütung) aufweist.

11. Die Vorrichtung nach Anspruch 1, ferner einen zweiten transparenten Schirm (129) aufweisend, der benachbart zu dem ersten transparenten Schirm (127) vorgesehen ist, wobei der genannte zweite transparente Schirm eine zweite Mehrzahl von optischen Elementen (26, 73) aufweist, die in dem genannten zweiten transparenten Schirm gebildet und sich horizontal über die Breite des zweiten Schirms erstrecken, wobei jedes der genannten optischen Elemente oberhalb des anderen vertikal beabstandet ist.

12. Die Vorrichtung nach Anspruch 11, bei welcher zumindest eine von der genannten ersten Mehrzahl von optischen Elementen und der genannten zweiten Mehrzahl von optischen Elementen Prismen (26) aufweist.

13. Die Vorrichtung nach Anspruch 12, bei welcher zumindest einer von dem genannten ersten transparenten Schirm und dem genannten zweiten transparenten Schirm eine Antireflektionsbeschichtung (Vergütung) aufweist.

14. Eine Vorrichtung zum tiefenscharfen Betrachten von ebenen Bildern durch Restrukturierung der Bilder, um die Tiefe in dem Bild wiederherzustellen, durch Austausch der wahrgenommenen Tiefenmarkierungen anstelle von stereoskopischem Sehen, **gekennzeichnet durch:**
einen transparenten Schirm (203) zum Positionieren zwischen einem ebenen Bild und einem Betrachter, wobei der genannte transparente Schirm eine Mehrzahl von Mikroprismen (26) aufweist, die in dem genannten transparenten Schirm gebildet und sich horizontal über die Breite des Schirms erstrecken, wobei jedes der genannten Mikroprismen (26) oberhalb des anderen vertikal beabstandet ist; und
ein optisches Element (204), das zwischen dem genannten transparenten Schirm und dem Betrachter positioniert ist, wobei das genannte optische Element funktionsfähig ist, um die effektiven Wege des Lichts, das durch den genannten transparenten Schirm hindurchgelassen wird, einzustellen.

15. Die Vorrichtung nach Anspruch 14, bei welcher das genannte optische Element eine plankonvexe Linse ist.

16. Die Vorrichtung nach Anspruch 15, bei welcher die genannte Linse eine Brennweite von mindestens 10 Inch (25,4 cm) aufweist.

17. Die Vorrichtung nach Anspruch 16, bei welcher die genannte Brennweite annähernd 30 Inch (76,2 cm) ist.

18. Die Vorrichtung nach Anspruch 15, bei welcher die genannten Mikroprismen (26) Winkel in dem Bereich von 30° bis 80° bilden und die genannte konvexe Linse das betrachtete Bild von annähernd 1,5 bis 2,0 mal vergrößert.

19. Die Vorrichtung nach Anspruch 14, bei welcher das genannte optische Element eine transparente Platte mit beabstandeten parallelen Seiten ist.

20. Die Vorrichtung nach Anspruch 19, bei welcher ein flüssiges Material mit einem Brechungsindex von wenigstens 1,5 zwischen den beabstandeten Seiten der genannten transparenten Platte vorgesehen ist.

21. Die Vorrichtung nach Anspruch 14, bei welcher der genannte transparente Schirm über die Breite des Schirms gekrümmt ist und das genannte optische Element eine nicht-sphärische, konvexe Linse ist.

22. Die Vorrichtung nach Anspruch 14, bei welcher das genannte optische Element als ein Teil des genannten transparenten Schirms vorgesehen ist.

23. Die Vorrichtung nach Anspruch 22, bei welcher das genannte optische Element eine plankonvexe Linse ist und die genannte Mehrzahl von Mikroprismen in der planen Fläche der Linse gebildet ist.

24. Die Vorrichtung nach Anspruch 23, bei welcher die genannten Mikroprismen Winkel in dem Bereich von 40° bis zu 90° bilden und bei welcher die genannte Linse von 60° nach unten bis zu 30° relativ zu einer Achse geneigt ist, welche rechtwinklig zu der Betrachtungsachse ist.

25. Die Vorrichtung nach Anspruch 23, bei welcher die genannten Mikroprismen Winkel in dem Bereich von 40° nach unten bis zu 5° bilden und bei welcher die genannte Linse von 60° bis zu 90° relativ zu einer Achse geneigt ist, die zu der Betrachtungsachse rechtwinklig ist.

26. Die Vorrichtung nach Anspruch 22, bei welcher das genannte optische Element eine transparente Platte mit beabstandeten parallelen Seiten ist und die genannte Mehrzahl von Mikroprismen in der planen Fläche der Platte gebildet ist.

## Revendications

1. Appareil pour visionner en profondeur de champ des images planes en restructurant les images pour retrouver une profondeur dans l'image par échange d'indications de profondeur perçue à la place de la stéréoscopie, caractérisé par:
un premier écran transparent (25, 45, 51, 71, 127, 203) intercaler entre une image plane et un observateur, ledit premier écran transparent ayant une partie centrale et deux parties latérales, et étant courbe sur toute sa largeur de façon que la partie centrale de l'écran soit placée, par rapport à l'image plane, à une distance plus grande que celle des parties latérales; et
une première pluralité d'éléments optiques (26, 73) formés dans ledit premier écran transparent et s'étendant horizontalement sur toute la largeur de l'écran, chacun desdits éléments optiques étant espacé verticalement au-dessus des autres.

2. Appareil selon la revendication 1, dans lequel lesdits éléments optiques sont des prismes (26) qui s'étendent sur toute la largeur dudit premier écran transparent.

3. Appareil selon la revendication 2, dans lequel lesdits prismes (26) sont présents avec une densité de 23,6 prismes/cm) (60 prismes/pouce linéaire) à 70 prismes/cm (160 prismes/pouce linéaire).

4. Appareil selon la revendication 2 ou 3, dans lequel les côtés du prisme (26) définissent un angle de 60° à 95°.

5. Appareil selon la revendication 4, dans lequel les prismes (26) sont inclinés suivant un angle de 0° à ± 40°.

6. Appareil selon la revendication 4, dans lequel les prismes (26) sont symétriques

7. Appareil selon la revendication 1, dans lequel lesdits éléments optiques sont des lentilles cylindriques (73), lesdites lentilles ayant un réglage dioptique variant sur la largeur du premier écran transparent en fonction de la distance de l'écran par rapport à l'image plane.

8. Appareil selon l'une quelconque des revendications 1 à 7, comprenant en outre un bâti (27, 131, 203A) pour ledit premier écran transparent, ledit bâti étant apte à supporter l'écran sur un moniteur vidéo.

9. Appareil selon la revendication 8, dans lequel ledit bâti comporte un capot (31) étanche à la lumière pour protéger contre la lumière le premier écran transparent et l'image plane.

10. Appareil selon l'une quelconque des revendications 1 à 9, dans lequel ledit premier écran transparent comporte un revêtement antireflet.

11. Appareil selon la revendication 1, comprenant en outre un deuxième écran transparent (129) disposé au voisinage immédiat dudit premier écran transparent (127), ledit deuxième écran transparent comportant une deuxième pluralité d'éléments optiques (26, 73) formés dans ledit deuxième écran transparent et s'étendant horizontalement sur toute la largeur du deuxième écran, chacun desdits éléments optiques étant espacé verticalement au-dessus des autres.

12. Appareil selon la revendication 11, dans lequel au moins une desdites première pluralité d'éléments optiques et deuxième pluralité d'éléments optiques comprend des prismes (26).

13. Appareil selon la revendication 12, dans lequel au moins un desdits premier écran transparent et deuxième écran transparent comporte un revêtement antireflet.

14. Appareil pour visionner en profondeur de champ des images planes en restructurant les images pour retrouver une profondeur dans l'image par échange d'indications de profondeur perçue à la place de la stéréoscopie, caractérisé par:
un écran transparent (203), à intercaler entre une image plane et un observateur, ledit écran transparent comportant une pluralité de microprismes (26) formés dans ledit écran transparent et s'étendant horizontalement sur toute la largeur de l'écran, chacun desdits microprismes (26) étant espacé verticalement au-dessus des autres; et
un élément optique (204) intercalé entre ledit écran transparent et l'observateur, ledit élément optique servant à régler les trajets effectifs de la lumière que laisse passer ledit écran transparent.

15. Appareil selon la revendication 14, dans lequel ledit élément optique est une lentille plan-convexe.

16. Appareil selon la revendication 15, dans lequel ladite lentille a une focale d'au moins 25,4 cm (10 pouces).

17. Appareil selon la revendication 16, dans lequel ladite focale est d'environ 76,2 cm (30 pouces).

18. Appareil selon la revendication 15, dans lequel lesdits microprismes (26) forment des angles de 30° à 80° et ladite lentille convexe agrandit environ 1,5 à 2 fois l'image visualisée.

19. Appareil selon la revendication 14, dans lequel ledit élément optique est une plaque transparente à faces parallèles espacées.

20. Appareil selon la revendication 19, dans lequel une matière liquide à indice de réfraction d'au moins 1,5 est disposée entre les faces espacées de ladite plaque transparente.

21. Appareil selon la revendication 14, dans lequel ledit écran transparent est courbe sur toute la largeur de l'écran et ledit élément optique est une lentille convexe non sphérique.

22. Appareil selon la revendication 14, dans lequel ledit élément optique constitue une partie dudit écran transparent.

23. Appareil selon la revendication 22, dans lequel ledit élément optique est une lentille plan-convexe, et ladite pluralité de microprismes est formée dans la surface plane de la lentille.

24. Appareil selon la revendication 23, dans lequel lesdits microprismes forment des angles de 40° à 90°, et dans lequel ladite lentille est inclinée de 60° à 30° par rapport à un axe perpendiculaire à l'axe de vision.

25. Appareil selon la revendication 23, dans lequel lesdits microprismes forment des angles compris entre 40° et 5°, et dans lequel ladite lentille est inclinée de 60° à 90° par rapport à un axe perpendiculaire à l'axe de vision.

26. Appareil selon la revendication 22, dans lequel ledit élément optique est une plaque transparente à faces parallèles espacées, et ladite pluralité de microprismes est formée dans la surface plane de la plaque.
